# EUROPÄISCHE PATENTSCHRIFT

(11) **EP 2 630 751 B1**
(45) Veröffentlichungstag und Bekanntmachung des Hinweises auf die Patenterteilung: **21.11.2018**
(21) Anmeldenummer: 11773681.9
(22) Anmeldetag: 12.10.2011
(51) Int. Cl.: H04L 12/24, H04L 12/40, H04L 12/403, H04J 3/16, G05B 19/042, G05B 9/00, G05B 19/418

(54) **Datenverarbeitungs- und -übertragungssystem mit einer Vorrichtung zum Datenaustausch durch PROFINET, wobei eine Soll-Topologie unter Ansprechen auf einen Satz konfigurationsrelevanter Informationen für eine bestimmte Variante einer modular aufgebauten Anlage oder Maschine generiert wird**
A data processing and transmission system comprising a device for data exchange by PROFINET, wherein a target topology responsive to a set of configuration-relevant information for a particular variant of a modular plant or machine is generated
Système de traitement et de transmission de données ayant un dispositif pour l'échange de données par PROFINET, dans lequel une topologie cible répondant à un ensemble d'informations pertinentes pour la configuration pour une variante particulière d'une installation ou d'une machine modulaire est générée

(30) Priorität: 18.10.2010 DE 102010048588
(43) Veröffentlichungstag der Anmeldung: 28.08.2013
(73) Patentinhaber: Phoenix Contact GmbH & Co. KG, 32825 Blomberg (DE)
(72) Erfinder: LESSMANN, Gunnar, 33039 Niehheim (DE); JESCHIN, Jörg, 37574 Einbeck (DE)
(74) Vertreter: Bill, Burkart Hartmut
(86) Internationale Anmeldenummer: PCT/EP2011/005117
(87) Internationale Veröffentlichungsnummer: WO 2012/052130

(56) Entgegenhaltungen:
- WO-A1-2008/031695
- WO-A1-2008/031695
- US-A1- 2003 061 323
- US-A1- 2003 236 875
- US-A1- 2003 236 875
- US-A1- 2004 103 176
- US-A1- 2004 103 176
- US-A1- 2004 258 015
- US-A1- 2007 025 355
- US-A1- 2007 025 355
- US-A1- 2008 109 548
- US-A1- 2008 109 548
- US-A1- 2008 281 947
- US-A1- 2008 281 947
- US-A1- 2009 019 146
- US-A1- 2009 228 611
- US-A1- 2010 131 941
- US-A1- 2010 205 281
- US-A1- 2010 205 281
- US-B1- 6 449 715
- DERMLA A ET AL: "EIN GLOBALES PROJEKTIER- UND MANAGEMENTWERKZEUG FUR LOKALE NETZE", AUTOMATISIERUNGSTECHNISCHE PRAXIS - ATP, OLDENBOURG INDUSTRIEVERLAG, MUNCHEN, DE, Bd. 32, Nr. 5, 1. Mai 1990 (1990-05-01), Seiten 258-261, XP000125657, ISSN: 0178-2320
- DERMLA A ET AL: "EIN GLOBALES PROJEKTIER- UND MANAGEMENTWERKZEUG FUR LOKALE NETZE", AUTOMATISIERUNGSTECHNISCHE PRAXIS - ATP, OLDENBOURG INDUSTRIEVERLAG, MUNCHEN, DE, vol. 32, no. 5, 1 May 1990 (1990-05-01), pages 258-261, XP000125657, ISSN: 0178-2320

## Beschreibung

Die vorliegende Erfindung ist insbesondere für industrielle Netze wie Profinet RT (real time) und Profinet IRT (isochronous real time) im Wesentlichen jedoch auch für beliebige andere (zum Beispiel Profibus oder Interbus), bevorzugt Ethernet-basierte Kommunikations- bzw. Datenübertragungsnetze insbesondere im Bereich der (Prozess-)Automatisierungstechnik (industrial Ethernet) anwendbar und betrifft ein Verfahren und eine Vorrichtung zur Konfiguration von Netzteilnehmern im Rahmen der Planung und Einrichtung einer insbesondere echtzeitbasierten bzw. echtzeitgebundenen und gegebenenfalls sychronen bzw. taktsynchronen (isochronen) und bevorzugt zyklischen Kommunikation bzw. Datenübertragung zwischen den Netzteilnehmern.

Vor allem echtzeitfähige bzw. echtzeitgebundene und insbesondere taktsynchrone (isochrone) Kommunikations- bzw. Datenübertragungsnetze wie zum Beispiel Profinet RT oder Profinet IRT, das heißt Netze, die zwischen wenigstens zwei ihrer Teilnehmer eine echtzeitbasierte bzw. echtzeitgebundene und gegebenenfalls synchrone bzw. taktsynchrone und somit eine deterministische und gegebenenfalls äquidistante Kommunikation bzw. Datenübertragung gewährleisten, erfordern im Zuge ihrer Einrichtung eine Planung bzw. Projektierung im Voraus. Dies betrifft zumindest die logische Konfiguration (beispielsweise bezüglich der Reihenfolge der zu übertragenden Daten sowohl bei Profinet RT als auch bei Profinet IRT) und gegebenenfalls auch die physische Konfiguration (beispielsweise bezüglich der Datenübertragungswege bei Profinet IRT zur Optimierung der Datenübertragung in Abhängigkeit von der Netztopologie).

Eine taktsychrone bzw. isochrone Kommunikation bzw. Datenübertragung, wie sie beispielsweise mit Profinet IRT möglich ist, ist insbesondere für die Kontrolle von Bewegungen in der Antriebstechnik (Motion Control), also etwa für eine Motorsteuerung, oder bei Positioniervorgängen erforderlich.

Im Rahmen dieser Anmeldung werden Kommunikations- bzw. Datenübertragungsnetze, also Netze die zwischen den durch sie bzw. über sie verbundenen Teilnehmern einen Datenaustausch und somit eine Kommunikation ermöglichen, auch vereinfacht nur als Netze bezeichnet. Bei den erwähnten Teilnehmern handelt es sich zum Beispiel um Computer, speicherprogrammierbare Steuerungen oder andere Maschinen oder Geräte, insbesondere aus dem Bereich der (Prozess-)Automatisierungstechnik wie Sensoren oder Aktoren, die über das Netz miteinander kommunizieren bzw. untereinander Daten austauschen und insbesondere Daten verarbeiten.

Die logische Konfiguration umfasst dabei insbesondere die sogenannte IO-Zuordnung, die Definition der zu sendenden bzw. empfangenen IO-Daten und die IO-Konfiguration.

Als IO-Zuordnung oder auch Mapping wird im Hinblick auf die Prozess- bzw. IO-Daten-Beschaltung von Geräten die Zuordnung von Variablen eines Steuerprogramms zu jeweiligen Prozess- bzw. IO-Datenobjekten und Netzschnittstellen (Ports und gegebenenfalls Sub-Ports) von Geräten bezeichnet. Diese Geräte liegen jedoch zunächst nur als ein jeweiliger Datensatz in einer Liste, der sogenannten Geräteliste, vor bzw. sind in dieser verzeichnet, wobei es sich bei den verzeichneten Geräten um potenzielle Netzteilnehmer handelt, die bevorzugt von einer das Steuerprogramm ausführenden Steuereinrichtung, insbesondere einer speicherprogrammierbaren Steuerung (SPS), die ebenfalls ein Netzteilnehmer ist, insbesondere zum Betreiben eines Automatisierungsprozesses, steuerbar sind bzw. gesteuert werden.

Die Geräteliste umfasst dabei bevorzugt die Datensätze aller möglichen Geräte der verschiedenen Varianten einer Anlage oder Maschine, die mittels des Steuerprogramms steuerbar sind. Ein Gerätedatensatz enthält eine Anzahl von Informationen, die das jeweilige Gerät beschreiben, wie zum Beispiel einen Gerätenamen, eine Produktbezeichnung, eine Funktionsbeschreibung, die Anzahl und jeweils eindeutige Bezeichnung bzw. Nummerierung der verfügbaren Netzschnittstellen und/oder die Definition der durch das Gerät bereitgestellten bzw. für das Gerät bereitzustellenden Prozess- bzw. IO-Datenobjekte.

Das Steuerprogramm ist bevorzugt modular zusammengesetzt und umfasst bevorzugter Weise für jedes mögliche Gerät bzw. jede Geräteart und jeden Gerätetyp der Anlage bzw. der Geräteliste entsprechende Programmabschnitte für dessen Steuerung, wobei ein jeweiliger Programmabschnitt einen oder mehrere Funktionsbausteine umfassen kann. Bei Ausführung des Steuerprogramms durch die Steuereinrichtung werden dann die Programmabschnitte ausgeführt, die zur Steuerung der tatsächlich in der Anlage befindlichen und somit an das Netz angeschlossenen und mit der Steuereinrichtung verbundenen Geräte bzw. Teilnehmer erforderlich sind.

Als IO-Konfiguration wird die Definition der Zusammensetzung der Prozess- bzw. IO-Daten in einem Datentelegramm insbesondere hinsichtlich deren Aufbau, Menge und Reihenfolge bezeichnet.

Zur physischen Konfiguration zählt die Definition einer Topologie des Netzes, das heißt der Netzteilnehmer und der Verbindungen zwischen ihnen bzw. ihren Netzschnittstellen.

Ferner werden auf Basis zumindest einiger solcher aus der logischen und physischen Konfiguration hervorgehenden Informationen zum Beispiel für ein Profinet IRT Netz durch einen IRT-Planungsalgorithmus zusätzlich noch IRT-Kommunikationsparameter für das Netz errechnet, welche beispielsweise Sende- und Empfangszeitpunkte definieren, also Zeiten, zu denen ein Datentelegramm von einem zu einem anderen Teilnehmer zu übertragen ist.

Zur Planung bzw. Projektierung der logischen und physischen Konfiguration eines echtzeitfähigen und gegebenenfalls isochronen Netzes im Rahmen der Planung und Einrichtung des Netzes zur Inbetriebnahme desselben, etwa nach einem Neuaufbau oder Umbau einer (Prozess-)Automatisierungsanlage, ist zum Beispiel für ein Profinet-IRT-Netz bekannt, dass eine mit der Projektierung solcher Netze bzw. Anlagen vertraute Person hierfür ein sogenanntes Engineeringsystem, das in der Regel durch ein auf einer Datenverarbeitungseinrichtung ausgeführtes Engineeringtool gebildet ist, in dessen Kontext auch ein IRT-Planungsalgorithmus zum Errechnen von IRT-Kommunikationsparametern für das IRT-Netz läuft, einsetzt. Zum Abschluss dieses Planungsschrittes werden die IRT-Kommunikationsparameter durch den IRT-Planungsalgorithmus berechnet. Anschließend werden vom Engineeringsystem, welches zumindest vorübergehend für diesen Zweck mit dem Netz verbunden ist, insbesondere die folgenden Informationen an die Steuereinrichtung übertragen: ein Steuer- bzw. Steuerungsprogramm, eine Geräteliste, eine IO-Zuordnung, eine IO-Konfiguration, eine Soll-Topologie als Vorgabe für die Einrichtung des Netzes mit seinen Teilnehmern und den Verbindungen sowie die weiteren IRT-Kommunikationsparameter. Im Allgemeinen sind derlei Engineeringsysteme für eine Vielzahl von Netztypen, neben Profinet, Profinet RT und Profinet IRT beispielsweise auch für Profibus, Interbus oder andere insbesondere Ethernet-basierte Busse, bekannt und erhältlich.

Aus diesen nunmehr auf der Steuereinrichtung vorliegenden Informationen, insbesondere aus der Soll-Topologie und den IRT-Kommunikationsparametern, werden dann an jeden Teilnehmer des Netzes die für ihn relevanten Teile übertragen. Die Teilnehmer des Netzes prüfen dann selbstständig, ob ihre direkten Nachbarteilnehmer mit den geplanten Teilnehmern und Netzschnittstellen gemäß Soll-Topologie übereinstimmen. Sofern jeder Teilnehmer entsprechende Übereinstimmung erkannt hat, kann die Soll-Topologie als Ist-Topologie aktiviert werden und das Netz mit seinen Teilnehmern bzw. die Anlage mit ihren Geräten in Betrieb genommen werden. Sollte jedoch ein Teilnehmer bei der Überprüfung seiner Nachbarn Abweichungen des Ist-Zustands von der Soll-Topologie erkennen, sendet er einen Diagnosealarm an die Steuereinrichtung, die eine Inbetriebnahme des Netzes solange verhindert, bis die Ursache behoben ist.

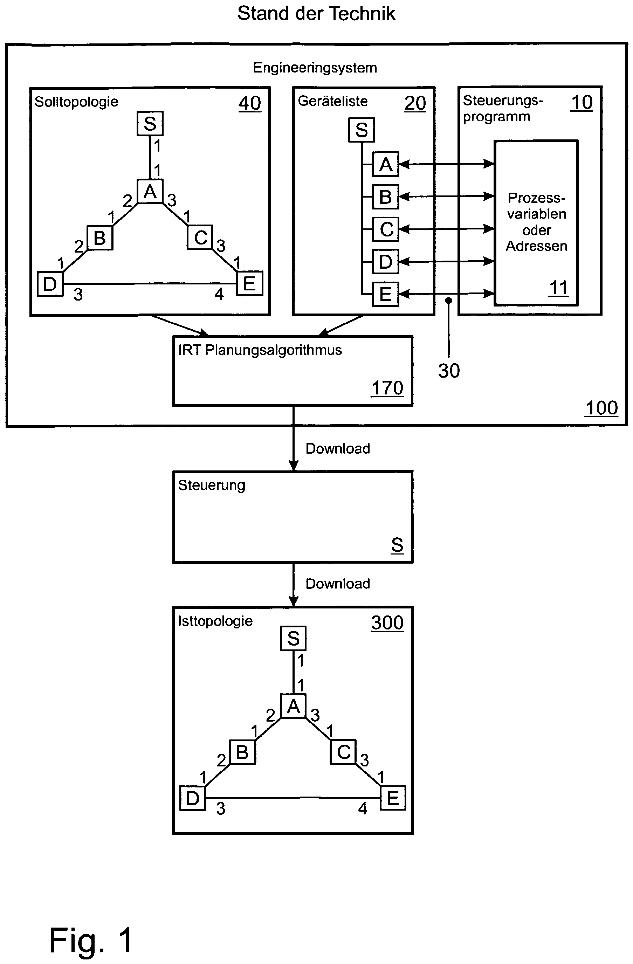

In Figur 1 ist diese bekannte Lösung schematisch abgebildet, wobei die physische Konfiguration durch die Soll-Topologie und die logische Konfiguration durch die IO-Zuordnung repräsentiert ist, wobei Letztere mittels der Pfeile zwischen der Geräteliste und dem Steuerungsprogramm dargestellt ist.

Ein Nachteil dieser in Figur 1 schematisch dargestellten Lösung gemäß Stand der Technik ist, dass zwar das Steuerungsprogramm derart gestaltet ist, dass einzelne Geräte, also Anlagen- oder Maschinenteile und -funktionen, durch entsprechende Programmmodule abgebildet sind, so dass mehrere Varianten einer Anlage oder Maschine durch das Steuerungsprogramm gesteuert werden können, dass jedoch bei jeder Änderung der Ist-Topologie bzw. des Ist-Zustands des Netzes, beispielsweise durch Umbau der Anlage, Entfernung und/oder Ergänzung von Geräten, vor allem die Soll-Topologie mittels des Engineeringsystems entsprechend angepasst und zusammen mit den darauf basierend neu berechneten IRT-Kommunikationsparametern erneut an die Steuereinrichtung übertragen werden muss, von wo aus insbesondere die betroffenen Teilnehmer sowie deren Nachbarteilnehmer die entsprechenden Teile der neuen Informationen, insbesondere der Soll-Topologie und IRT-Parameter, erhalten, bevor das Netz bzw. die Analage im veränderten Zustand wieder in Betrieb genommen werden kann. Gemäß einer weiteren bekannten Lösung zur Projektierung bzw. Planung eines echtzeitfähigen und gegebenenfalls auch isochronen Netzes ist vorgesehen, auf der Steuereinrichtung gleich mehrere alternative Konfigurationen und insbesondere die jeweiligen Soll-Topologien und gegebenenfalls die zugehörigen IRT-Parameter entsprechend der möglichen Varianten einer Anlage oder Maschine vorzuhalten, die dann, ohne dass hierfür nochmals ein Engineeringsystem erforderlich wäre, entsprechend der jeweiligen Ist-Topologie bzw. des jeweiligen Ist-Zustand des Netzes einer bestimmten Variante der Anlage beispielsweise über eine der Steuereinrichtung zugeordnete Mensch-Maschine-Schnittstelle, insbesondere eine einfache, mit der Steuereinrichtung verbundene Anzeige- und Bedieneinheit nur noch ausgewählt werden brauchen.

Ein Problem dieser Lösung ist jedoch, dass es für variantenreiche Maschinen, wie zum Beispiel beim modularen Maschinenbau, wo die Anzahl der Maschinenvarianten nahezu unbegrenzt ist, nicht mehr praktikabel ist, für jede mögliche Variante die erforderliche Konfiguration inklusive der Soll-Topologie und den IRT-Kommunikationsparametern auf der Steuereinrichtung bereits vorzuhalten.

Eine weitere bekannte Lösung gemäß der deutschen Patentanmeldung DE 102006042949.4 basiert auf der Ist-Topologie des Netzes und verzichtet gewissermaßen auf eine Soll-Topologie. Ein sogenannter Topologieserver in einem Kommunikationsnetz mit weiteren Hauptteilnehmern ist dabei derart programmiert, dass er prüft, ob ein netzwerkinternes Ereignis eingetreten ist, und im Falle des Eintrittes des netzwerkinternen Ereignisses selbsttätig die aktuelle Ist-Topologie ermittelt, anhand von den Hauptteilnehmern zugeordneten Kommunikationsbeziehungen selbsttätig topologieabhängige Kommunikationsdaten ermittelt und selbsttätig an jeden Hauptteilnehmer den für ihn relevanten Teil der topologieabhängigen Kommunikationsdaten übermittelt.

Diese Lösung bietet zwar gegenüber der zuvor beschriebenen Vorgehensweise eine höhere Flexibilität. Von Nachteil ist dabei jedoch das Sicherheitsrisiko, welches aus dem Verzicht auf eine von der Ist-Topologie bzw. dem Ist-Zustand des Netzes unabhängige Soll-Topologie resultiert. Denn ohne die Möglichkeit eines Soll-Ist-Vergleiches können Fehler wie zum Beispiel Fehlverdrahtungen oder das Fehlen zumindest ein Gerätes, dass entsprechend einer bestimmten Variante der Maschine oder Anlage vorgesehen wäre, nicht zuverlässig erkannt werden. Des Weiteren ist gemäß dieser Lösung zwar vorgesehen, dass eine Bedienperson den automatischen Konfigurationsvorgang von außen anstoßen kann, jedoch ist keine sonstige Möglichkeit zur Einflussnahme auf die Konfiguration vorgesehen.

Ein anderes Problem ergibt sich daraus, dass somit zwar Lösungen bekannt sind, die zumindest ansatzweise eine dynamische Anpassung der physischen Konfiguration an geänderte Netztopologien ermöglichen, jedoch im Wesentlichen keine dynamische Anpassung der logischen Konfiguration an Veränderungen in Bezug auf die IO-Zuordnungen und/oder IO-Konfigurationen. Vielmehr sind IO-Zuordnungen und/oder IO-Konfigurationen stets starr bereits mittels eines Engineeringsystems definiert worden und erfordern zu deren Anpassung in der Regel erneut die Zuhilfenahme des Engineeringsystems. Dies ist äußerst unpraktisch, wenn zum Beispiel ein Gerät einer Anlage oder Maschine etwa aufgrund eines Defekts ausgetauscht werden soll und das neue Gerät zwar die gleichen Funktionen wie das alte Gerät bietet, jedoch beispielsweise eine andere Prozess- bzw. IO-Daten-Beschaltung und/oder eine andere Zusammensetzung der Prozess- bzw. IO-Daten in einem Datentelegramm erfordert, da es anderen Typs ist und/oder von einem anderen Hersteller stammt als das alte Gerät.

Der Umgang mit einem Engineeringsystem wird jedoch in aller Regel nur von entsprechend spezialisiertem Personal beherrscht und kann somit den normalen Inbetriebnehmer bzw. Betreiber einer Anlage überfordern.

Die U.S. Veröffentlichungsschrift US 2003/0061323 A1 zeigt ein System zum Netzwerkmanagement von "thin clients". Die thin clients sind in einer Hierarchie mit mehreren administrativen Servern organisiert.

Aus der U.S. Patentanmeldung US 2004/0258015 A1 geht ein Verfahren zum Betreiben eines isochronen, zyklischen Kommunikationssystems hervor. Ein Kommunikationszyklus wird hier in einen Teil für Echtzeit-Kommunikation und einen zweiten Teil für nicht-Echtzeit-Kommunikation unterteilt. Das Kommunikationssystem umfasst "Subscriber" und ein Speicher zum Speichern von Konfigurationsdaten wird in jedem Subscriber vorgehalten.

Die U.S. Veröffentlichungsschrift US 2009/0019146 A1 wiederum beschreibt ein System für das Management von Profibus-Geräteinformationen in einem verteilten Kontrollsystem. Ein Profibus-Gerät ist über eine Netzwerkverbindung zu einem I/O-Modul verbunden, das I/O-Modul empfängt Profibus-Geräteinformationen von dem Profibus-Gerät enthaltend Informationen über die angeschlossenen Gerätemodule. Nach Erhalt der Eingangsparameter führt das I/O-Modul eine Reihe von zusätzlichen Schritten zur Verarbeitung, Aufrechterhaltung und Übermittlung der Eingangsparameter an einen anfragenden Prozessor aus.

Die U.S. Patentschrift US 6 449 715 B1 zeigt ein Konfigurationssystem für ein Prozesskontrollnetzwerk mit einem Controller, einem Gerätenetzwerk, welches über ein erstes I/O-Protokoll kommuniziert und einem Profibus-Netzwerk, welches über ein Profibus I/O-Protokoll kommuniziert und welches eine Konfigurationsdatenbank bereitstellt, in welcher Konfigurationsinformationen enthalten sind. Eine Dokumentationsroutine liest die Konfigurationsdatenbank aus, um eine Prozesskontrolldokumentation anzuzeigen.

Aus der U.S. Patentanmeldung US 2009/0228611 A1 geht ein Verfahren zur Konfiguration von Feldgeräten eines digitalen Kommunikationsnetzwerkes hervor. Jedes Feldgerät beinhaltet eine Konfigurationsdomäne, welche mit einem nichtflüchtigen Speicher verbunden ist und in welcher Konfigurationsdaten für das Feldgerät gespeichert sind.

Die U.S. Veröffentlichungsschrift US 2010/0131941 A1 zeigt ein Verfahren in einem Computersystem für den Datentransfer zwischen einem ersten Datenverarbeitungsgerät und einem zweiten Datenverarbeitungsgerät, wobei ein Abrufprozess zum Abrufen von Daten von dem ersten Datenverarbeitungsgerät zum zweiten Datenverarbeitungsgerät über eine Verbindung zwischen den beiden Geräten durchgeführt wird. Es wird ein Abrufparameter bereitgestellt, welcher Informationen zum Abrufziel enthält, und welcher in einer "loader data file" an den Abrufprozess übermittelt wird.

Aus der U.S. Patentanmeldung US 2004/0103176 A1 geht ein Verfahren zur automatischen Konfiguration von Terminals oder Netzwerkkomponenten hervor. Die Konfiguration wird in Abhängigkeit von der Positionierung der Netzwerkkomponente durch eine Konfigurationseinheit durchgeführt.

Die internationale Veröffentlichungsschrift WO 2008/031695 A1 zeigt ein Kommunikationsnetzwerk mit Hauptteilnehmern und Topologieserver. Die Hauptteilnehmer sind gemäß einer aktuellen Isttopologie miteinander verbunden und der Topologieserver prüft, ob ein netzwerkinternes Ereignis eingetreten ist. Tritt ein solches Ereignis ein, prüft der Topologieserver die Isttopologie und übermittelt an jeden Hauptteilnehmer den für ihn relevanten Teil der Kommunikationsdaten.

Aus der U.S. Patentanmeldung US 2010/0205281 A1 geht ein Netzwerkmanagementverfahren hervor, welches eine Datenbank an Netzwerkkonfigurationsprofilen unterhält, wobei jedes Netzwerkkonfigurationsprofil einem Netzwerkgerätetyp und einer physischen Position entspricht. Netzwerkgeräte des Netzwerks werden anhand der Datenbank an Netzwerkkonfigurationsprofilen konfiguriert.

Die U.S. Veröffentlichungsschrift US 2003/0236875 A1 zeigt ein Komplex-Managementsystem, welches ein Erkennungs- und Überwachungs-Subsystem, ein Referenzmodellspeicher-Subsystem, ein Referenzmodelltranskriptions-Subsystem, ein Referenzmodellerstellungs-Subsystem, ein Modellvergleichs-Subsystem, ein Referenzmodellupdate-Subsystem, ein Nichtkonformität-Visualisierungs-Subsystem, ein Konformitäts-Überwachungs-Subsystem, ein Prozedur-Änderungsgenerator-Subsystem und ein Automatisierungs-Änderungs-Subsystem umfasst.

Aus der U.S. Veröffentlichungsschrift US 2007/0025355 A1 geht ein Verfahren und ein System hervor, welches Ursachen potentieller Verschlechterungen in Netzwerksystemleistungen sowie beabsichtigte und unbeabsichtigte Änderungen an Einträgen in Routingtabellen erkennt. Es wird hierfür ein Simulator bereitgestellt, welches das fehlerfreie Netzwerk simuliert und anhand der Unterschiede zum tatsächlichen Netzwerk Leistungseinbußen erkennt.

Die U.S. Patentanmeldung US 2008/0109548 A1 zeigt ein Systemcheck-Verarbeitungsgerät, eine automatische Erkundungseinheit, welche automatisch die Gegenwart oder Abwesenheit von Systemgeräten erkennt. Eine Checkliste enthält Check-Bedingungen der Geräte, so dass durch den Vergleich von Design-Daten mit dem Ergebnis der automatischen Erkundungseinheit Probleme im Netzwerk erkannt werden können.

Aus der U.S. Veröffentlichungsschrift US 2008/0281947 A1 geht schließlich ein System und ein Verfahren zum automatischen Bereitstellen eines Netzwerk-Designs hervor. Das System erhält ein maschinenlesbares Netzwerk-Design als Input, validiert die Design-Topologievorgaben und gibt das Design automatisch über aktuelle Hardware-Elemente aus, ohne dass Benutzereingaben erforderlich sind.

Ferner zeigt das Dokument "Ein globales Projektier- und Managementwerkzeug für lokale Netze" von A. Dermla et Al., aus "Automatisierungstechnische Praxis atp" 32 (1990), Seiten 258 bis 261, das System "SINEC NM", welches bei der Projektierung und Inbetriebnahme von SINEC-Netzen verwendet werden kann. Es soll eine durchgängige, gemeinsame Projektierung und Überwachung unterschiedlicher Teilnehmer im lokalen Netz SINEC H1 ermöglichen. Teilnehmer lassen sich mit einer Kommunikationsüberwachung prüfen, ihre Parameter auslesen und verändern.

Eine der vorliegenden Erfindung zugrundeliegende Aufgabe besteht daher darin, eine alternative und vor allem flexible und sichere Möglichkeit für Konfiguration von Netzteilnehmern im Rahmen der Planung und Einrichtung einer Datenübertragung zwischen den Netzteilnehmern bereitzustellen, die somit zumindest einen der diesbezüglich oben erwähnten Nachteile des Standes der Technik ausräumt.

Insbesondere soll diese Möglichkeit für Netze mit einer echtzeitgebundenen und gegebenenfalls synchronen bzw. isochronen Datenübertragung zwischen den Teilnehmern geeignet sein.

Insbesondere soll der Einsatz eines Engineeringsystems weitestgehend überflüssig sein.

Insbesondere soll weiterhin ein Soll-Ist-Vergleich vor allem hinsichtlich der Netztopologie möglich sein. Insbesondere soll jedoch das Vorbereiten und Vorhalten einer Vielzahl von Soll-Topologien vermieden werden.

Insbesondere soll eine logische Konfiguration und/oder physische Konfiguration der Kommunikation und des Netzes möglich sein.

Insbesondere soll diese Möglichkeit für variantenreiche Anlagen oder Maschinen geeignet sein.

Als Lösung sieht die vorliegende Erfindung gemäß einem der unabhängigen Ansprüche ein Verfahren zum Konfigurieren wenigstens eines Teilnehmers eines Netzes hinsichtlich des Datenaustauschs über das Netz gemäß eines Soll-Zustands vor, wonach zumindest der wenigstens eine Teilnehmer über das Netz mit einer Vorrichtung verbunden wird, die derart programmiert ist, dass sie unter Ansprechen auf wenigstens eine von einer Bedienperson angegebene konfigurationsrelevante Information eine Menge von für das Konfigurieren zumindest des wenigstens einen Teilnehmers erforderlichen Konfigurationsdaten generiert und zumindest eine Teilmenge dieser generierten Menge von Konfigurationsdaten an den wenigstens einen Teilnehmer über das Netz übermittelt.

Als Lösung sieht die vorliegende Erfindung gemäß einem anderen der unabhängigen Ansprüche eine Vorrichtung vor, welche geeignet ist zur Durchführung des vorstehend beschriebenen Verfahrens ist, und welche Mittel zur Datenverarbeitung und zum Ausführen von Programmcode sowie mit Mitteln zum Datenaustausch mit wenigstens einem weiteren Teilnehmer besitzt, mit dem die Vorrichtung, die selbst sozusagen den ersten Teilnehmer darstellt, über ein Netz verbindbar ist, wobei die Vorrichtung programmiert ist, zumindest den wenigstens einen weiteren Teilnehmer hinsichtlich des Datenaustauschs über das Netz gemäß eines Soll-Zustands zu konfigurieren. Unter Ansprechen auf wenigstens eine von einer Bedienperson angegebene konfigurationsrelevante Information generiert die Vorrichtung eine Menge von für das Konfigurieren zumindest des wenigstens einen weiteren Teilnehmers erforderlichen Konfigurationsdaten und übermittelt zumindest eine Teilmenge dieser generierten Menge von Konfigurationsdaten über das Netz an den wenigstens einen weiteren Teilnehmer.

Zur Programmierung der Vorrichtung ist im Wesentlichen nur einmal ein Engineeringsystem oder ein vergleichbares System nötig. Danach ist ein Teilnehmer, der mit dem Netz und über dieses mit der Vorrichtung verbunden ist, ohne nochmalige Zuhilfenahme eines Engineeringsystems hinsichtlich des Datenaustauschs über das Netz gemäß eines Soll-Zustands konfigurierbar, wobei die Bedienperson in den Konfigurationsvorgang aufgrund der erforderlichen Angabe zumindest einer konfigurationsrelevanten Information eingebunden ist. Somit besteht zum einen für die Bedienperson eine Möglichkeit zur Einflussnahme in den ansonsten automatisch ablaufenden Konfigurationsvorgang zum anderen ergibt sich daraus, wie noch genauer in Verbindung mit der Beschreibung der Figuren dargelegt wird, eine erhöhte Sicherheit gegenüber der Lösung, wie sie beispielsweise in der DE 102006042949.4 vorgeschlagen wird. Von Vorteil ist ferner, dass die Bedienperson für den Umgang mit einem in der Regel sehr komplexen Engineeringsystem nicht ausgebildet sein muss, um einen Netzteilnehmer hinsichtlich des Datenaustauschs über das Netz konfigurieren zu können.

Zweckmäßiger Weise ist die wenigstens eine konfigurationsrelevante Information mittels einer der Vorrichtung bevorzugt zugeordneten Mensch-Maschine-Schnittstelle, insbesondere mittels einer mit der Vorrichtung verbundenen Bedieneinheit mit Ein- und Ausgabemitteln, von der Bedienperson angebbar.

Bevorzugt ist die Vorrichtung programmiert, zumindest den wenigstens einen weiteren Teilnehmer hinsichtlich logischer und/oder physischer Aspekte des Datenaustauschs über das Netz zu konfigurieren.

Logische Aspekte sind zum Beispiel, wie bereits eingangs erwähnt, die zu sendenden bzw. empfangenen IO-Daten, die IO-Zuordnung und die IO-Konfiguration. Physische Aspekte betreffen insbesondere, wie ebenfalls bereits erwähnt, die Topologie des Netzes.

Somit ist die Vorrichtung sowie das Verfahren vorteilhafter Weise einerseits für die Konfiguration von Teilnehmern in Netzen wie Profinet RT, die nur einer logischen Konfiguration bedürfen, als auch von Teilnehmern in Netzen wie Profinet IRT, die zudem auch eine physischen Konfiguration erfordern, einsetzbar bzw. anwendbar.

Wie noch genauer in Verbindung mit der Beschreibung der Figuren dargelegt wird, ist die durch die vorliegende Erfindung ohne Zuhilfenahme eines Engineeringsystems ermöglichte logische Konfiguration insbesondere von Vorteil, wenn zum Beispiel ein Gerät einer Anlage oder Maschine ausgetauscht werden soll und das neue Gerät zwar die gleichen Funktionen wie das alte Gerät bietet, jedoch beispielsweise eine andere Prozess- bzw. IO-Daten-Beschaltung und/oder eine andere Zusammensetzung der Prozess- bzw. IO-Daten in einem Datentelegramm erfordert, da es anderen Typs ist und/oder von einem anderen Hersteller stammt als das alte Gerät.

Erwähnt sei an dieser Stelle, dass die Vorrichtung und das Verfahren aber auch derart ausgeführt sein kann, dass nur die logische oder nur die physische Konfiguration mittels der Vorrichtung erfolgt, während die jeweils andere andere Konfiguration, sofern es das jeweils vorliegende Netz erfordert, weiterhin mittels eines Engineeringsystems erfolgt.

Besonders bevorzugt umfasst die Menge der generierten und für das Konfigurieren zumindest des wenigstens einen weiteren Teilnehmers hinsichtlich physischer Aspekte erforderlichen Konfigurationsdaten eine Soll-Topologie für das Netz.

Die Soll-Topologie wird dabei bezüglich der vom Benutzer angegebenen Menge von zum Beispiel für die jeweils vorliegende Variante einer modular aufgebauten Anlage oder Maschine konfigurationsrelevanten Informationen von der Vorrichtung generiert. Somit ist es zum einen nicht erforderlich mehrere Soll-Topologien für mehrere mögliche Varianten vorzuhalten, von denen dann die jeweils passende auszuwählen wäre. Zum anderen ist aber weiterhin eine tatsächliche Soll-Topologie als Soll-Vorgabe gegeben, die einen tatsächlichen Soll-Ist-Vergleich, und damit insbesondere das Erkennen von Fehlern wie zum Beispiel Fehlverdrahtungen oder das Fehlen zumindest ein Gerätes, dass entsprechend einer bestimmten Variante der Maschine oder Anlage vorgesehen wäre, ermöglicht und somit die Sicherheit gewährleistet.

Je nach Art bzw. Spezifikation des Netzes und seiner weiteren Teilnehmer, umfasst die Vorrichtung zweckmäßiger Weise Mittel zum Datenaustausch, die für einen zyklischen, echtzeitgebundenen und/oder taktsynchronen Datenaustausch über das Netz ausgebildet sind. Dabei ist die Vorrichtung, die bevorzugt Mittel zum echtzeitgebundenen Datenaustausch umfasst, besonders bevorzugt programmiert, zumindest den wenigstens einen weiteren Teilnehmer hinsichtlich eines echtzeitgebundenen Datenaustauschs über das Netz zu konfigurieren. Alternativ oder ergänzend ist die Vorrichtung, die bevorzugt Mittel zum taktsynchronen Datenaustausch umfasst, besonders bevorzugt programmiert, zumindest den wenigstens einen weiteren Teilnehmer hinsichtlich eines taktsynchronen Datenaustauschs über das Netz zu konfigurieren.

Bevorzugt umfasst die Vorrichtung Mittel zum Datenaustausch für einen Datenaustausch über das Netz, die gemäß Profinet-, Profinet RT- oder Profinet IRT-Spezifikation ausgebildet sind.

Besonders bevorzugt umfasst die Menge der generierten und für das Konfigurieren zumindest des wenigstens einen weiteren Teilnehmers erforderlichen Konfigurationsdaten eine Menge von von der Vorrichtung berechneten IRTspezifischen Parametern. Somit ist die Vorrichtung vorteilhafter Weise ausgebildet, auch die für die Konfiguration etwa eines Profinet IRT-Netzes erforderlichen IRT-Kommunikationsparameter zu berechnen, so dass weder mehrere IRT-Parametersätze für mehrere mögliche Varianten einer modular aufgebauten Anlage oder Maschine vorzuhalten sind, von denen dann der jeweils passende auszuwählen wäre, noch jeweils ein Engineeringsystem zur erneuten Berechnung dieser Parameter heranzuziehen ist.

Gemäß einer besonders bevorzugten Ausführungsvariante liest die Vorrichtung eine Menge von konfigurationsrelevanten Informationen aus dem Netz und/oder dem wenigstens einen weiteren Teilnehmer aus, generiert basierend darauf die Menge von für das Konfigurieren zumindest des wenigstens einen weiteren Netzteilnehmers erforderlichen Konfigurationsdaten und übermittelt unter Ansprechen auf wenigstens eine von der Bedienperson angegebene konfigurationsrelevante Information, insbesondere eine Freigabe der generierten Menge von Konfigurationsdaten, über das Netz zumindest eine Teilmenge dieser generierten Menge von Konfigurationsdaten an den wenigstens einen weiteren Teilnehmer.

Gemäß einer bevorzugten Ausführungsvariante überprüft die Vorrichtung die Menge der generierten und für das Konfigurieren zumindest des wenigstens einen weiteren Teilnehmers erforderlichen Konfigurationsdaten zunächst auf Plausibilität in sich, bevor sie zumindest eine Teilmenge dieser generierten Menge von Konfigurationsdaten an den wenigstens einen weiteren Teilnehmer über das Netz übermittelt.

Gemäß einer besonders bevorzugten Ausführungsvariante überprüft die Vorrichtung die Menge der generierten und für das Konfigurieren zumindest des wenigstens einen weiteren Teilnehmers erforderlichen Konfigurationsdaten zunächst auf Plausibilität hinsichtlich des Ist-Zustands des Netzes und zumindest des wenigstens einen weiteren Teilnehmers überprüft, bevor sie zumindest eine Teilmenge dieser generierten Menge von Konfigurationsdaten an den wenigstens einen weiteren Teilnehmer über das Netz übermittelt.

Bevorzugter Weise ist die Vorrichtung programmiert, sich selbst mittels zumindest einer Teilmenge der generierten Menge von Konfigurationsdaten hinsichtlich des Datenaustauschs über das Netz zu konfigurieren.

Gemäß einer besonders bevorzugten Ausführungsvariante ist die Vorrichtung derart programmiert, nach dem Konfigurieren den wenigstens einen weiteren Teilnehmer zu steuern, wobei die Vorrichtung insbesondere eine speicherprogrammierbare Steuerung ist. Somit ist es erfindungsgemäß bevorzugt vorgesehen, dass eine speicherprogrammierbare Steuerung derart programmiert ist, dass sie Teilnehmer eines Netzes, welche insbesondere Geräte einer Anlage oder Maschine sind, nicht nur steuern, sondern im Vorfeld der Betriebsphase, diese auch hinsichtlich des Datenaustauschs über das Netz konfigurieren kann, und also hierfür neben dem Programmcode eines Steuerprogramms auch Programmcode eines Konfigurationsprogramms ausführt.

Ferner sieht die vorliegende Erfindung gemäß einem anderen der unabhängigen Ansprüche ein Datenverarbeitungs- und - übertragungssystem vor, umfassend eine Vorrichtung gemäß einer der vorstehend beschriebenen Ausführungsformen sowie wenigstens einen weiteren Teilnehmer, die über ein Netz miteinander verbunden sind und Daten miteinander austauschen können.

Ferner sieht die vorliegende Erfindung gemäß einem anderen der unabhängigen Ansprüche einen Datenträger mit einem darauf gespeicherten Programmcode vor, wobei der Programmcode derart ausgebildet ist, dass eine Vorrichtung gemäß einer der vorstehend beschriebenen Ausführungsformen ausgebildet ist, wenn sie mit dem Programmcode programmiert ist.

Diese und weitere bevorzugte Ausführungsvarianten und Vorteile der vorliegenden Erfindung werden nachfolgend unter Bezugnahme auf die beigefügten Zeichnungen erläutert.

Von der beigefügten Zeichnungen zeigen
- Figur 1: eine schematische Darstellung einer aus dem Stand der Technik bekannten Lösung zur Konfiguration von Teilnehmern eines Netzes;
- Figur 2a: eine schematische Darstellung einer erfindungsgemäßen Ausführungsvariante zur Konfiguration von Teilnehmern eines Netzes;
- Figur 2b und 2c: eine schematische Darstellung eines Beispiel für die Konfiguration von Geräten einer zweiten erweiterten Anlagenvariante (Figur 2c) ausgehend von einer ersten Grundvariante der Anlage (Figur 2b) unter Anwendung der Ausführungsvariante der Erfindung gemäß Figur 2a;
- Figur 3a: eine schematische Darstellung einer weiteren erfindungsgemäßen Ausführungsvariante zur Konfiguration von Teilnehmern eines Netzes;
- Figur 3b und 3c: eine schematische Darstellung eines Beispiel für die Konfiguration von Geräte einer Anlage unter Anwendung der Ausführungsvariante der Erfindung gemäß Figur 3a, nachdem ein Gerät eines ersten Typs (Figur 3b) durch ein Gerät eines zweiten Typs (Figur 3c) ersetzt wurde.

Die Figur 1 zeigt eine schematische Darstellung einer aus dem Stand der Technik bekannten Lösung zur Konfiguration von Teilnehmern eines Netzes wie sie im Wesentlichen bereits eingangs beschrieben wurde.

Zur logischen und physischen Konfiguration der Geräte A, B, C, D und E sowie der Steuerung S, welche zu einer bestimmten Variante einer in Figur 1 nicht näher gezeigten industriellen Anlage gehören und gleichzeitig Teilnehmer eines Netzes sind, über das sie gemäß einer Ist-Topologie 300 verbunden sind und Daten übertragen bzw. untereinander austauschen können sollen, ist gemäß der in Figur 1 wiedergegebenen, aus dem Stand der Technik bereits bekannten Lösung stets ein Engineeringsystem 100 erforderlich, das in der Regel durch ein auf einer Datenverarbeitungseinrichtung, in der Regel einem PC oder einer Workstation, ausgeführtes Engineeringtool gebildet ist.

Die Ist-Topologie 300 gestaltet sich derart, dass zunächst die Steuerung S über ihre Netzschnittstelle 1 mit der Netzschnittstelle 1 des Geräts A verbunden ist. Das Gerät A besitzt neben der Netzschnittstelle 1 zwei weitere Netzschnittstellen, nachfolgend auch als Ports bezeichnet, wobei es über den Port 2 mit dem Port 1 des Geräts B und über den Port 3 mit dem Port 1 des Geräts C verbunden ist. Das Gerät B ist über seinen weiteren Port 2 mit dem Port 1 des Geräts D verbunden und das Geräte C hat über seinen weiteren Port 3 eine Verbindung zum Port 1 des Geräts E. Zudem besteht noch eine Verbindung zwischen dem Port 3 des Geräts D und dem Port 4 des Geräts E.

Im Rahmen der Planung bzw. Projektierung einer Anlage mit wenigstens einer Steuerung S und einer Anzahl von Geräten A bis E, die als Teilnehmer eines Netzes per Datenaustausch in Kommunikation stehen wird das Engineeringsystem 100 für mehrere Teilaufgaben einsetzt. Im Allgemeinen sind derlei Engineeringsysteme für eine Vielzahl verschiener Netztypen bekannt und erhältlich.

Zum einen dient es dem Entwurf eines Steuer- bzw. Steuerungsprogramms 10 mit dem eine Steuereinrichtung wie die Steuerung S programmierbar ist, Geräte wie die Geräte A bis E, welche insbesondere Sensoren oder Aktoren sind, während des Betriebs der Anlage zu steuern. Das Steuerungsprogramm 10 umfasst hierzu entsprechenden Programmcode für zumindest jedes der Geräte A bis E. Zum anderen wird mittels des Engineeringsystems 100 eine Teilnehmer- bzw. Geräteliste 20 erstellt, welche insbesondere Datensätze für die Steuerung S und die Geräte A bis E enthält, wobei jeder Gerätedatensatz eine Menge von Informationen umfasst, die das jeweilige Gerät detailliert beschreiben. Angemerkt sei, dass auch wenn die Geräteliste in der Figur 1 hierarchisch dargestellt ist, derart dass die Geräte A bis E der Steuerung S untergeordnet sind, dies zumindest nicht als Topologie zu verstehen ist.

Unter Einbeziehung der Geräteliste 20 sowie des Steuerungsprogramms 10 erfolgt mittels des Engineeringsystems 100 ferner die logische und physische Konfiguration der Netzteilnehmer S und A bis E hinsichtlich eines Datenaustauschs über das Netz, welches in diesem Fall als Profinet IRT ausgeführt ist, so dass die Kommunikation zwischen den Netzteilnehmern zyklisch, echtzeitgebunden und taktsynchron erfolgt bzw. erfolgen soll.

Die logische Konfiguration umfasst dabei zum Beispiel die IO-Zuordnung 30, welche in Figur 1 mittels der Pfeile zwischen der Geräteliste 20 enthaltenen Gerätedatensätzen und dem Steuerungsprogramm 10 dargestellt ist. Bei der IO-Zuordnung, welche auch als Mapping bezeichnet wird, werden einzelne Prozessvariablen oder Adressen 11 des Steuerungsprogramms 10 den in den jeweiligen Gerätedatensätzen der Geräteliste 20 definierten Prozess- bzw. IO-Datenobjekten zumindest der Geräte A bis E zugeordnet. Ebenfalls zur logischen Konfiguration gehört in der Regel die in Figur 1 nicht dargestellte IO-Konfiguration, welche die Definition der Zusammensetzung der Prozess- bzw. IO-Daten der einzelnen Teilnehmer in einem Datentelegramm insbesondere hinsichtlich deren Aufbau, Menge und Reihenfolge betrifft.

Die physische Konfiguration ist in Figur 1 durch die Soll-Topologie 40 repräsentiert, mittels welcher die Kommunikationsverbindungen zwischen den Netzteilnehmern, also den Geräten A bis E sowie der Steuerung S, projektiert werden. Hierzu wird auf die in den Gerätedatensätzen der Geräteliste 20 enthaltenen Informationen und Bezeichnungen bezüglich einzelnen Geräte A bis E und der Steuerung S und vor allem deren Netzschnittstellen zurückgegriffen.

Grundsätzlich sei noch einmal erwähnt, dass die Planung der logischen Konfiguration im Wesentlichen unabhängig von der physischen Konfiguration, insbesondere unabhängig von der Topologie, erfolgen kann. Ferner kann die Planung der physischen Konfiguration, also insbesondere der Soll-Topologie, im Wesentlichen unabhängig von der logischen Konfiguration erfolgen, sofern zumindest eine Geräteliste vorhanden ist, die wenigstens die Bezeichnungen der einzelnen Teilnehmer und deren einzelner Ports enthält.

Darüber hinaus umfasst das Engineeringsystem 100 gemäß Figur 1 auch einen IRT-Planungsalgorithmus 170 zum Errechnen von IRT-Kommunikationsparametern für das Profinet IRT-basierte Netz, welche beispielsweise Sende- und Empfangszeitpunkte definieren, also Zeiten, zu denen ein Datentelegramm von einem zu einem anderen Teilnehmer zu übertragen ist, insbesondere auf Basis von Informationen aus der Soll-Topologie 40 und der Teilnehmer- bzw. Geräteliste 20 sowie der IO-Konfiguration.

Im Anschluss an die Planung der logischen und physischen Konfiguration mittels des Engineeringsystems 100 werden die gesamten Konfigurationsdaten einschließlich der Geräteliste 20 und des Steuerungsprogramms 10 an die Steuerung S übertragen (in der Figur als Download bezeichnet), mit welcher das Engineeringsystem 100 zumindest vorübergehend verbunden ist.

Aus diesen nunmehr auf der Steuereinrichtung S vorliegenden Konfigurationsdaten werden dann an jeden weiteren Teilnehmer des Netzes, also an die Geräte A bis E, die für ihn relevanten Teile übertragen (in der Figur als Download bezeichnet). Die Teilnehmer des Netzes prüfen dann selbstständig, ob ihre direkten Nachbarteilnehmer mit den geplanten Teilnehmern und Netzschnittstellen gemäß Soll-Topologie übereinstimmen.

Sofern jeder Teilnehmer entsprechende Übereinstimmung erkannt hat, kann die projektierte mit ihren Geräten bzw. das das Netz mit seinen Teilnehmern aktiviert und in Betrieb genommen werden. Sollte jedoch ein Teilnehmer bei der Überprüfung seiner Nachbarn Abweichungen des Ist- vom Soll-Zustand erkennen, sendet er einen Diagnosealarm an die Steuerung S, die daraufhin eine Inbetriebnahme der Anlage und des Netzes solange verhindert, bis der ursächliche Fehler behoben ist.

Auf diese Art und Weise muss gemäß der in Figur 1 dargestellten, aus dem Stand der Technik bekannten Lösung vorgegangen werden, sobald sich, etwa aufgrund einer Umgestaltung der Gestaltung der Anlage gemäß einer anderen Variante, hinsichtlich der Teilnehmer der Ist-Topologie Änderungen ergeben, sei es dass zumindest ein Teilnehmer hinzugefügt oder einer entfernt wird oder die Teilnehmer anders miteinander verbunden werden.

Die Nachteiligkeit dieser bekannten Lösung ist offensichtlich und wurde eingangs bereits dargelegt.

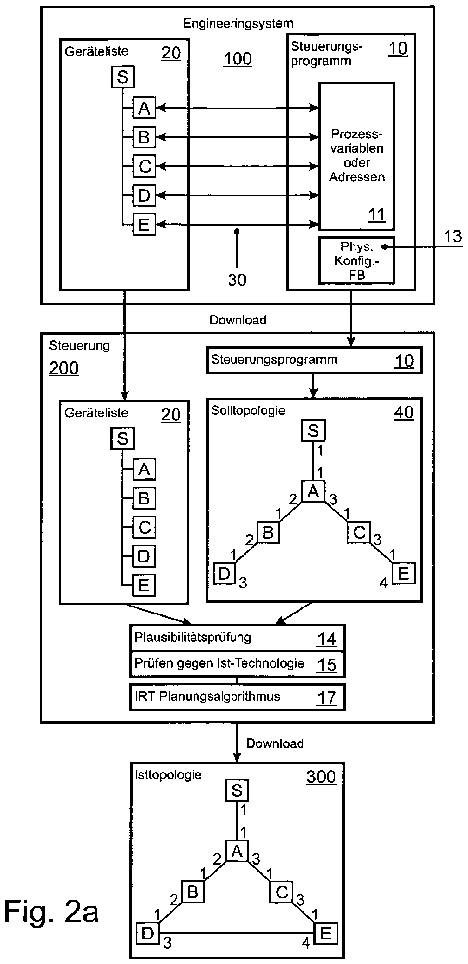

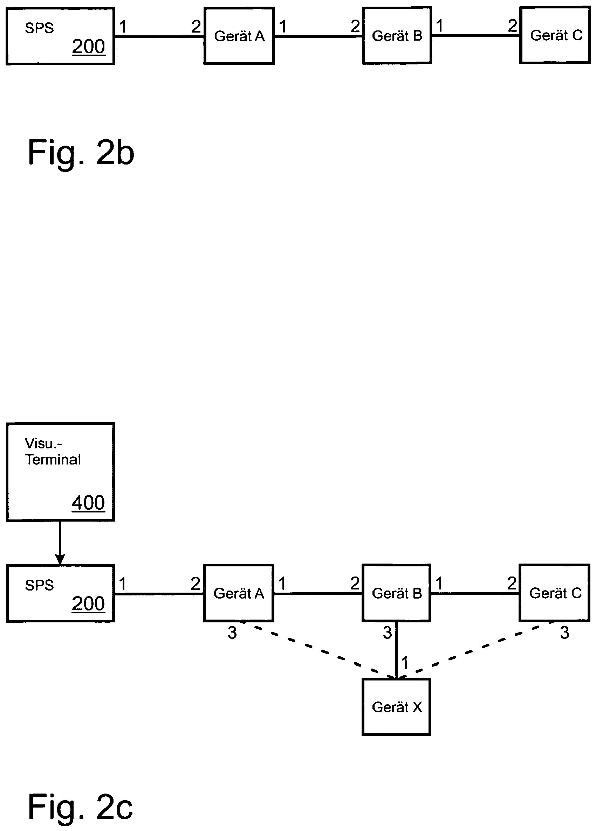

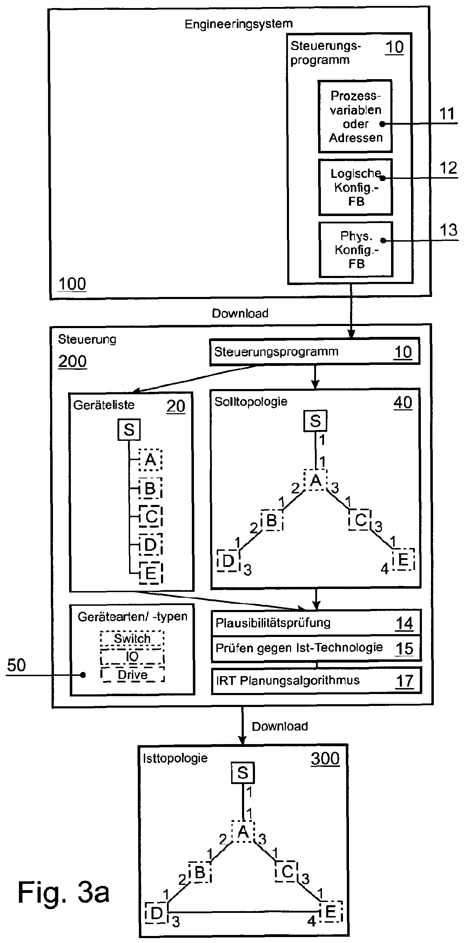

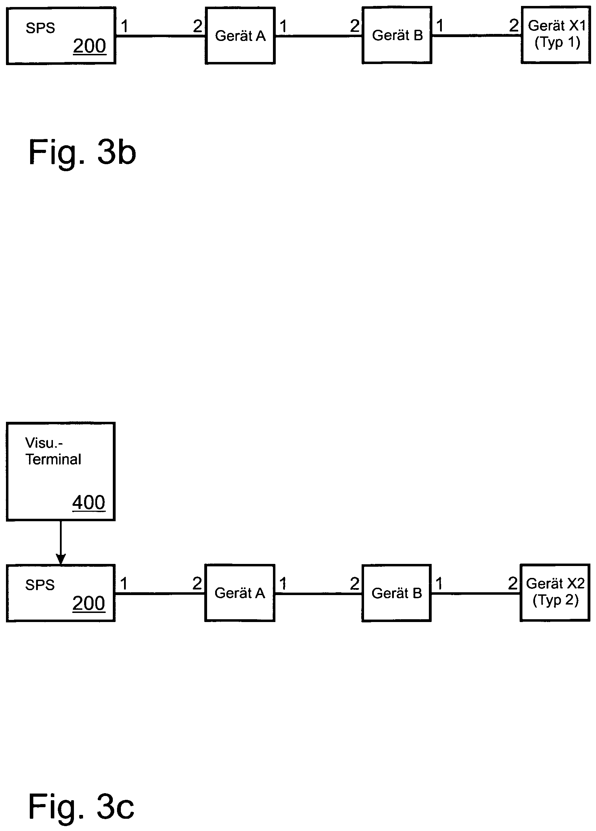

Zur besseren Nachvollziehbarkeit werden bei der nachfolgenden Beschreibung erfindungsgemäßer Ausführungsvarianten anhand der Figuren 2a, 2b und 2c sowie 3a, 3b und 3c die im Rahmen der vorangegangenen Beschreibung einer bereits bekannten Lösung gemäß Figur 1 eingeführten Bezugszeichen beibehalten, sofern es sich um vergleichbare Merkmale handelt.

Die Figur 2a zeigt eine schematische Darstellung einer erfindungsgemäßen Ausführungsvariante zur Konfiguration von Teilnehmern eines Netzes.

Bei den zu konfigurierenden Netzteilnehmern handelt es sich um die Geräte A, B, C, D und E sowie die Steuerung S, welche zu einer bestimmten Variante einer in Figur 2a nicht näher gezeigten industriellen Anlage gehören und über ein Netz gemäß einer Ist-Topologie 300 verbunden sind, über das sie Daten übertragen bzw. untereinander austauschen können sollen. Die Ist-Topologie 300 gestaltet sich derart, dass zunächst die Steuerung S über ihre Netzschnittstelle 1 mit der Netzschnittstelle 1 des Geräts A verbunden ist. Das Gerät A besitzt neben der Netzschnittstelle 1 zwei weitere Netzschnittstellen, nachfolgend auch als Ports bezeichnet, wobei es über den Port 2 mit dem Port 1 des Geräts B und über den Port 3 mit dem Port 1 des Geräts C verbunden ist. Das Gerät B ist über seinen weiteren Port 2 mit dem Port 1 des Geräts D verbunden und das Geräte C hat über seinen weiteren Port 3 eine Verbindung zum Port 1 des Geräts E. Zudem besteht noch eine Verbindung zwischen dem Port 3 des Geräts D und dem Port 4 des Geräts E. Sowohl die Steuerung S als auch die Geräte A bis E können neben den in der Figur 2a gezeigten Netzschnittstellen bzw. Ports jeweils noch weitere besitzen, die jedoch in der Figur nicht gezeigt sind, da sie gemäß der Ist-Topologie 300 keine Netzverbindung aufweisen.

Im Rahmen der Planung bzw. Projektierung einer Anlage mit zweckmäßiger Weise wenigstens einer Steuerung und einer Anzahl von Geräten, die als Teilnehmer eines Netzes per Datenaustausch in Kommunikation stehen, wird auch erfindungsgemäß ein Engineeringsystem 100 für mehrere Teilaufgaben einsetzt. Aus der nachfolgenden detaillierten Beschreibung einer erfindungsgemäßen Ausführungsvariante werden jedoch die Unterschiede gegenüber dem Stand der Technik, wie insbesondere anhand der Figur 1 dargelegt, und die daraus resultieren Vorteile deutlich.

Zum einen dient das Engineeringsystem 100 dem Entwurf eines Steuer- bzw. Steuerungsprogramms 10, mit dem eine Steuereinrichtung wie die Steuerung S programmierbar ist, Geräte wie die Geräte A bis E, welche insbesondere Sensoren oder Aktoren sind, während des Betriebs der Anlage zu steuern. Das Steuerungsprogramm 10 umfasst hierzu entsprechenden Programmcode für zumindest jedes der Geräte A bis E, insbesondere aber auch bereits für weitere Geräte, die bei anderen Varianten der Anlage als der gemäß Figur 2a zum Einsatz kommen würden. Zum anderen wird mittels des Engineeringsystems 100 eine Teilnehmer- bzw. Geräteliste 20 erstellt, welche insbesondere Datensätze für die Steuerung S und die Geräte A bis E enthält, bevorzugt aber auch bereits für weitere Geräte, die bei anderen Varianten der Anlage zum Einsatz kommen würden, wobei jeder Gerätedatensatz eine Menge von Informationen umfasst, die das jeweilige Gerät detailliert beschreiben, insbesondere einen eindeutigen Gerätenamen oder eine sonstige Bezeichnung, die eine eindeutige Identifizierung des jeweiligen Geräts erlaubt, Informationen zu Geräteart, -typ und -hersteller, eine Funktionsbeschreibung, eine Definition der Prozessdaten des Geräts, eine eindeutige Bezeichnung jeder Netzschnittstelle des Geräts und den jeweiligen Netzschnittstellentyp, zum Beispiel hinsichtlich des erforderlichen Übertragungsmediums (etwa Kupfer oder Glasfaser). Aber auch in diesem Beispiel bildetet die Geräteliste noch keine Topologie ab.

Unter Einbeziehung der Geräteliste 20 sowie des Steuerungsprogramms 10 erfolgt mittels des Engineeringsystems 100 ferner die logische Konfiguration insbesondere der Netzteilnehmer S und A bis E hinsichtlich eines Datenaustauschs über das Netz, welches in diesem Fall wiederum als Profinet IRT ausgeführt ist, so dass die Kommunikation zwischen den Netzteilnehmern zyklisch, echtzeitgebunden und taktsynchron erfolgt bzw. erfolgen soll. Die logische Konfiguration umfasst dabei zum Beispiel wieder die IO-Zuordnung 30, welche in Figur 2a mittels der Pfeile zwischen der Geräteliste 20 enthaltenen Gerätedatensätzen und dem Steuerungsprogramm 10 dargestellt ist, und die in Figur 2a nicht dargestellte IO-Konfiguration.

Die physische Konfiguration erfolgt bei der in Figur 2a dargestellten erfindungsgemäßen Ausführungsvariante hingegen nicht mehr mittels des Engineeringsystems 100. Erfindungsgemäß ist stattdessen vorgesehen, ein Konfigurationsprogramm bevorzugt mittels des Engineeringsystems 100 zu entwerfen bzw. zu erstellen, welches Programmcode umfasst, mit dem eine Vorrichtung 200 programmierbar ist, Netzteilnehmer wie die Geräte A bis E, hinsichtlich des Datenaustausch über das Netz zu konfigurieren und hierfür unter Ansprechen auf wenigstens eine von einer Bedienperson angegebene konfigurationsrelevante Information eine Menge von erforderlichen Konfigurationsdaten zu generieren und zumindest eine Teilmenge der generierten Konfigurationsdaten über das Netz an einen zu konfigurierenden Teilnehmer zu übertragen, wobei zur Konfiguration hinsichtlich physischer Aspekte die von der Vorrichtung 200 generierte Menge von Konfigurationsdaten zweckmäßiger Weise eine Soll-Topologie umfasst.

Wie aus der Figur 2a zu erkennen ist, handelt es sich bei der Vorrichtung 200 in diesem Beispiel um eine Steuerung, so dass hier die Vorrichtung 200 gleichzeitig auch die Steuerung S ist. Aus diesem Grund umfasst das mittels des Engineeringssystems 100 erstellte Steuerungsprogramm 10 neben einer Menge von Programmcode für die Gerätesteuerung mit entsprechenden Prozessvariablen und/oder Adressen 11 auch einen zusätzlichen Programmabschnitt 13 welcher Programmcode, bevorzugt unter Einbindung wenigstens eines Funktionsbausteins, für die physische Konfiguration von Geräten bzw. Netzteilnehmern enthält. Derartige Funktionsbausteine oder ähnliche bzw. andere Mechanismen können auch in ein eigenständiges Konfigurationsprogramm eingebunden sein, vor allem dann, wenn die Vorrichtung 200 separat von der Steuerung S ausgeführt ist, was anwendungsspezifisch erfindungsgemäß ebenfalls vorgesehen sein kann.

Funktionsbausteine zum Hinzufügen und Verbinden von Teilnehmern anhand deren jeweiliger eindeutiger Geräte- und Portbezeichnung zur Generierung einer Soll-Topologie sehen zum Beispiel wie folgt aus:

| |
|---|
| ```
 FB_AddDevice(IN: DeviceID)
 
 FB_AddConnecton(IN: DeviceID, PortID, PartnerDeviceID,
 PartnerPortID) return ErrorCode
``` |

Erfindungsgemäß kann daher bei dieser Ausführungsvariante bereits die Übertragung der Konfigurationsdaten einschließlich der Geräteliste 20 und des Steuerungsprogramms 10 samt des Programmabschnitts 13 an die Vorrichtung 200, welche in diesem Fall gleichzeitig auch die Steuerung S ist, erfolgen (in der Figur als Download bezeichnet), wobei das Engineeringsystem 100 zumindest vorübergehend mit der Vorrichtung 200 verbunden ist.

Somit ist es erfindungsgemäß bevorzugt vorgesehen, dass eine speicherprogrammierbare Steuerung derart programmiert ist, dass sie Teilnehmer eines Netzes, welche insbesondere Geräte einer Anlage oder Maschine sind, nicht nur steuern, sondern im Vorfeld der Betriebsphase, diese auch hinsichtlich des Datenaustauschs über das Netz konfigurieren kann, und also hierfür neben dem Programmcode eines Steuerprogramms auch Programmcode eines Konfigurationsprogramms ausführt.

Bei Ausführung des Steuerungsprogramms wird bevorzugter Weise zunächst der Programmabschnitt 13 und somit der Programmcode zur Konfiguration der Netzteilnehmer ausgeführt. Über eine Bedieneinheit, welche in der Figur nicht dargestellt ist, hat eine Bedienperson nun die Möglichkeit, auf einfache Weise konfigurationsrelevante Informationen anzugeben und mit Blick auf die gewünschte Netztopologie insbesondere welches Gerät über welchen Port mit einem anderen verschaltet ist. Dabei kann die Bedienperson auf die Informationen aus den Datensätzen der Geräteliste 20 zurückgreifen und braucht somit bevorzugter Weise nur noch die entsprechenden Geräte und Netzschnittstellen auswählen.

Unter Ansprechen auf diese Informationen, generiert die Vorrichtung 200 bzw. die Steuerung S zusätzlich zu den Konfigurationsdaten, welche ihr bezüglich logischer Aspekte des Datenaustauschs zwischen den Netzteilnehmern bereits vom Engineeringsystem 100 übermittelt wurden, weitere Konfigurationsdaten bezüglich der physischen Aspekte des Datenaustausch zwischen den Netzteilnehmern und insbesondere eine Soll-Topologie 40. Hierzu werden zweckmäßiger weise die Informationen aus den Datensätzen der Geräteliste 20 bezüglich der einzelnen Geräte A bis E und der Steuerung S und vor allem deren Netzschnittstellen herangezogen.

Zur Laufzeit sieht zum Beispiel ein Programmausschnitt zur Verknüpfung des Teilnehmer S und A bis E zur Generierung der Soll-Topologie 40, wobei die oben erwähnten Funktionsbausteine entsprechend oft genutzt werden, wie folgt aus:

| |
|---|
| ```
 /* Hinzufügen der Teilnehmer S und A bis E zur Soll-
 Topologie */
 FB_AddDevice("S");
 FB_AddDevice("A");
 FB_AddDevice("B");
 FB_AddDevice("C");
``` |
| ```
 FB_AddDevice("D");
 FB_AddDevice("E");
 
 /* Verschalten von Teilnehmer S mit Teilnehmer A */
 ErrorCode = FB_AddConnection("S", "1", "A", "1");
 If ErrorCode != OK /* Reaktion im Fehlerfall */;
 
 /* Verschalten von Teilnehmer A mit Teilnehmer B */
 ErrorCode = FB_AddConnection("A", "2", "B", "1");
 If ErrorCode != OK /* Reaktion im Fehlerfall */;
 
 /* Verschalten von Teilnehmer A mit Teilnehmer C */
 ErrorCode = FB_AddConnection("A", "3", "C", "1");
 If ErrorCode != OK /* Reaktion im Fehlerfall */;
 
 /* Verschalten von Teilnehmer B mit Teilnehmer D */
 ErrorCode = FB_AddConnection("B", "2", "D", "1");
 If ErrorCode != OK /* Reaktion im Fehlerfall */;
 
 /* Verschalten von Teilnehmer C mit Teilnehmer E */
 ErrorCode = FB_AddConnection("C", "3", "E", "1");
 If ErrorCode != OK /* Reaktion im Fehlerfall */;
 
 /* Verschalten von Teilnehmer D mit Teilnehmer E */
 ErrorCode = FB_AddConnection("D", "3", "E", "4");
 If ErrorCode != OK /* Reaktion im Fehlerfall */;
``` |

Im Fehlerfall würden entsprechende Diagnoseinformationen bereitstehen, die zum Beispiel über eine Maschine-Mensch-Schnittstelle wie eine mit der Vorrichtung 200 verbundene Bedieneinheit (nicht dargestellt) ausgegeben werden können. Zweckmäßiger Weise ist die Vorrichtung 200 mit weiterem zusätzlichen Programmcode 14 derart programmiert, die generierte Soll-Topologie 40 auf Plausibilität in sich zu überprüfen. Überprüft wird dabei insbesondere, ob die zu verschaltenden Ports der Geräte zumindest gemäß der aus der Geräteliste 20 entnehmbaren Gerätebeschreibung vorhanden sind und vom gleichen Schnittstellentyp sind, und ob die Topologie ansonsten ebenfalls widerspruchsfrei ist. Für den Fehlerfall würden entsprechende Diagnoseinformationen bereitstehen, die zum Beispiel über eine Maschine-Mensch-Schnittstelle ausgegeben werden können. Ein derartiger Programmcode 14 könnte etwa wie folgt aussehen:

| |
|---|
| ```
 /* Prüfung der Soll-Topologie */
 ErrorCode = ValidateTopology();
 If ErrorCode != OK /* Reaktion im Fehlerfall */;
``` |

Bevorzugt ist die Vorrichtung 200 mit weiterem zusätzlichen Programmcode 15 derart programmiert, die generierte Soll-Topologie in Bezug auf die vorliegende Ist-Topologie 300 zu überprüfen, insbesondere dahingehend, ob die gemäß Soll-Topologie 40 zu verschaltenden Geräte in der Ist-Topologie 300 überhaupt vorhanden sind und ob die Geräteart und der Gerätetyp gemäß Soll und Ist übereinstimmt. Bevorzugt wird zudem geprüft, ob die eindeutigen Gerätebezeichnungen, wie sie gemäß Geräteliste 20 und Soll-Topologie 40 vorgesehen sind, mit denen der Geräte A bis E in der Ist-Topologie 300 übereinstimmen. Für den Fehlerfall würden entsprechende Diagnoseinformationen bereitstehen, die zum Beispiel über eine Maschine-Mensch-Schnittstelle ausgegeben werden können.

Da das Netz gemäß Ist-Topologie 300 als Profinet IRT ausgeführt ist, ist die Vorrichtung 200 zweckmäßiger Weise mit weiterem zusätzlichen Programmcode 17 derart programmiert, dass sie die Funktionalität eines IRT-Planungsalgorithmusses zum Berechnen von IRT-Kommunikationsparametern, insbesondere im Hinblick auf die entsprechend zu reservierenden Größen der Zeitschlitze für die Datenübertragung, basierend auf der Geräteliste 20 und der in Figur 2a nicht dargestellten IO-Konfiguration sowie der generierten Soll-Topologie 40, bietet.

Ein Beispiel für derartigen Programmcode 17 könnte etwa wie folgt aussehen:

| |
|---|
| ```
 /* IRT-Planungsalgorithmus starten */
 CalculateCommunicationParameters();
``` |

Der Programmcode 14, 15 und 17 ist in Figur 2a als jeweils eigenständiges Konfigurationsprogramm dargestellt, alternativ könnten es aber auch zum Beispiel drei Programmabschnitte eines einzigen Konfigurationsprogramms oder aber des Steuerprogramms 10 sein, dies hängt insbesondere auch davon ab, ob es sich bei der Vorrichtung 200 um eine Steuerung oder eine von der Steuerung separate Vorrichtung handelt.

Schließlich werden dann die geplanten und generierten bzw. berechneten Konfigurationsdaten von der Vorrichtung 200 bzw. der Steuerung S an die weiteren Teilnehmer des Netzes gemäß Ist-Topologie 300, also an die Geräte A bis E übertragen (in der Figur als Download bezeichnet), wobei jeder Teilnehmer die für ihn relevante Teilmenge an Konfigurationsdaten erhält. Dies geschieht zum Beispiel aufgrund folgenden Programmcodes:

| |
|---|
| ```
 /* Netzwerk in Betrieb nehmen und generierte Konfiguration
 (Projektierung) auf Geräte laden */
 Activate Configuration();
``` |

Die Teilnehmer prüfen nach Erhalt der Konfigurationsdaten dann selbstständig, ob ihre direkten Nachbarteilnehmer gemäß Ist-Topologie 300 mit den gemäß Soll-Topologie geplanten Teilnehmern und Netzschnittstellen übereinstimmen.

Alternativ oder ergänzend hat die Bedienperson bei der Angabe der wenigstens einen konfigurationsrelevanten Information erfindungsgemäß die Möglichkeit, eine von der Vorrichtung 200 automatisch zumindest teilweise ermittelte und bevorzugt als sogenannte Online-Visualisierung der Anlage an der Bedieneinheit angezeigte Netztopologie als Soll-Topologie freizugeben. Die Vorrichtung 200 ist in diesem Fall entsprechend zur Generierung einer Soll-Topologie basierend auf aus dem Netz und den verbundenen Teilnehmern gemäß Ist-Topologie ausgelesenen Verschaltungsinformationen programmiert, wobei die ausgelesenen Verschaltungsinformationen bevorzugt eindeutige Bezeichnungen der Geräte und deren Schnittstellen umfassen.

Da eine Bedienperson erfindungsgemäß in den Konfigurationsprozess derart eingebunden ist, dass sie zumindest eine konfigurationsrelevante Information angeben muss, sei es dergestalt, dass sie mit Blick auf die gewünschte Netztopologie einfach über eine Bedieneinheit angibt, welches Gerät über welchen Port mit einem anderen verbunden ist, oder dass sie eine von der Vorrichtung 200 automatisch ermittelte Netztopologie als Soll-Topologie freigibt, bevor die von der Vorrichtung 200 generierte Menge an Konfigurationsdaten an die Netzteilnehmer übertragen und aktiviert, ist weiterhin die Sicherheit, die ein tatsächlicher Soll-Ist-Vergleich bietet, gewährleistet, ohne dass jedoch bei jeder Änderung an einer Anlage der erneute Einsatz eines Engineeringsystems erforderlich wäre, wobei grundsätzlich beliebige Soll-Topologien von der Vorrichtung 200 generierbar sind.

Die Figuren 2b und 2c zeigen ein Beispiel für die Konfiguration der Geräte einer zweiten erweiterten Anlagenvariante (Figur 2c) ausgehend von einer ersten Grundvariante der Anlage (Figur 2b) unter Anwendung der Ausführungsvariante der Erfindung gemäß Figur 2a.

Eine Anlage umfasst gemäß ihrer Grundvariante, wie sie die Figur 2b zeigt, neben einer Steuerung 200 noch die Geräte A, B und C, welche miteinander verbunden und somit Teilnehmer eines gemeinsamen Kommunikationsnetzes sind. Die kleinen Nummern neben den Teilnehmern stellen die eindeutige Bezeichnung ihrer jeweiligen Netzschnittstellen dar.

Neben dieser Grundvariante gibt es weitere Varianten, gemäß welcher die Anlage zum Beispiel weitere Geräte als optionale Zusatz-Komponenten umfassen kann, die ebenfalls als Teilnehmer in das Netz einzubinden sind, damit zu deren Steuerung ein Datenaustausch zumindest mit der Steuerung 200 möglich ist. So gibt es zum Beispiel eine Variante, bei der die Anlage noch ein Gerät für die Materialzufuhr umfasst, welches potentiell an verschiedenen Punkten im Netz angebunden werden kann.

Beim Aufbau der Anlage, werden die einzelnen Geräte entsprechend der Bestellung der Kunden und der Gegebenheiten vor Ort zusammengebaut. Dabei wird im Beispiel, wie es die Figur 2c zeigt, auch das Gerät für Materialzufuhr (Gerät X) hinzugefügt und über seinen Port 1 an den Port 3 von Gerät B angeschlossen. Dies ist an der durchgehenden Linie zwischen den Geräten X und B zu erkennen, während durch die gestrichelten Linien zwischen dem Gerät X und den Geräte A bzw. C die sonstigen Verbindungsmöglichkeiten angedeutet sind.

Die Steuerung (SPS) 200 gemäß Figur 2b und 2c ist gemäß der oben beschriebenen und in Figur 2a dargestellten Ausführungsvariante programmiert, einerseits die Geräte aller möglichen Varianten der Anlage steuern zu können, anderseits aber auch die Konfigurationsdaten generieren zu können, welche zur Konfiguration der jeweiligen Geräte hinsichtlich physischer Aspekte des Datenaustauschs zwischen den Geräten und der Steuerung erforderlich sind.

Demzufolge befindet sich auf der Steuerung 200 bereits, ohne dass dies in den Figuren 2b und 2c explizit dargestellt ist, neben dem entsprechenden Programmcode auch eine Geräteliste und die zur Konfiguration der Geräte hinsichtlich logischer Aspekte des Datenaustauschs erforderlichen Konfigurationsdaten und insbesondere IO-Zuordnung und IO-Konfiguration, wie oben bereits in Verbindung mit Figur 2a beschrieben.

Um die Geräte der in Figur 2c dargestellten Anlagenvariante auch hinsichtlich physischer Aspekte des Datenaustauschs konfigurieren zu können, benötigt die Steuerung 200 noch die Eingabe wenigstens einer konfigurationsrelevanten Information durch die Bedienperson. Letztere kann hierzu den mit der Steuerung 200 verbundenen Visualisierungsterminal 400 als Bedieneinheit nutzen, um anzugeben, dass nunmehr zusätzlich zur Grundvariante das Gerät X über seinen Port 1 mit dem Port 3 des Geräts B verbunden ist. Dabei kann die Bedienperson auf die Informationen aus den Datensätzen der Geräteliste zurückgreifen und braucht somit bevorzugter Weise nur noch die entsprechenden Geräte und Netzschnittstellen auswählen.

Der entsprechende Programmabschnitt zur anschließenden Verarbeitung der von der Bedienperson angegebenen konfigurationsrelevanten Informationen und Generierung einer entsprechenden Soll-Topologie könnte zur Laufzeit zum Beispiel wie folgt aussehen:

| |
|---|
| ```
 FB_AddDevice("SPS");
 FB_AddDevice("A");
 FB_AddDevice("B");
 FB_AddDevice("C");
 FB_AddDevice("X");
 FB_AddConnection("SPS", "1", "A", "2");
 FB_AddConnection("A", "1", "B", "2");
 FB_AddConnection("B", "1", "C", "2");
 FB_AddConnection("B", "3", "X", "1");
``` |

Des Weiteren erfolgt eine Plausibilitätsprüfung der generierten Soll-Topologie auf der Steuerung 200. Zudem erfolgt eine Prüfung der Soll-Topologie gegen die vorliegende Ist-Topologie. Für den Fehlerfall würden jeweils entsprechende Diagnoseinformationen bereitstehen, die zum Beispiel über den mit der Steuerung 200 verbundenen Visualisierungsterminal 400 ausgegeben werden können.

Weiterhin werden die notwendigen IRT-Kommunikationsparameter, zum Beispiel Sende- und Empfangszeitpunkte von Datentelegrammen, errechnet.

Schließlich werden die geplanten und generierten bzw. berechneten Konfigurationsdaten von der Steuerung 200 an die weiteren Teilnehmer des Netzes, also an die Geräte A, B, C und X übertragen, wobei jeder Teilnehmer die für ihn relevante Teilmenge an Konfigurationsdaten erhält.

Danach kann der Betrieb der Anlage in der erweiterten Variante gemäß Figur 2c aktiviert werden.

Die Figur 3a ist eine schematische Darstellung einer weiteren erfindungsgemäßen Ausführungsvariante zur Konfiguration von Teilnehmern eines Netzes, welche insbesondere Geräte einer industriellen Automatisierungsanlage sind.

Bei den zu konfigurierenden Netzteilnehmern handelt es sich um die Geräte A, B, C, D und E sowie die Steuerung S, welche zu einer bestimmten Variante einer in Figur 3a nicht näher gezeigten industriellen Anlage gehören und über ein Netz gemäß einer Ist-Topologie 300 verbunden sind, welches in diesem Fall wiederum als Profinet IRT ausgeführt ist, so dass die Kommunikation zwischen den Netzteilnehmern zyklisch, echtzeitgebunden und taktsynchron erfolgt bzw. erfolgen soll. Die kleinen Nummern neben den Teilnehmern stellen die eindeutige Bezeichnung ihrer jeweiligen Netzschnittstellen dar.

Im Rahmen der Planung bzw. Projektierung einer Anlage mit zweckmäßiger Weise wenigstens einer Steuerung und einer Anzahl von Geräten, die als Teilnehmer eines Netzes per Datenaustausch in Kommunikation stehen, wird gemäß dieser Ausführungsvariante ein Engineeringsystem 100 im Wesentlichen nur noch zum Entwerfen bzw. Erstellen eines Steuer- bzw. Steuerungsprogramms 10 eingesetzt, mit dem eine Steuereinrichtung wie die Steuerung S programmierbar ist, Geräte wie die Geräte A bis E während des Betriebs der Anlage zu steuern. Das Steuerungsprogramm 10 umfasst hierzu entsprechenden Programmcode für zumindest jedes der Geräte A bis E, insbesondere aber auch bereits für weitere Geräte bzw. Gerätetypen oder -arten, die bei anderen Varianten der Anlage als der gemäß Figur 3a zum Einsatz kommen würden.

Aus der nachfolgenden detaillierten Beschreibung dieser erfindungsgemäßen Ausführungsvariante werden die Unterschiede gegenüber der zuvor anhand der Figuren 2a bis 2c beschriebenen Ausführungsvariante und die daraus resultieren zusätzlichen Vorteile deutlich.

Gemäß dieser weiteren erfindungsgemäßen Ausführungsvariante erfolgt zusätzlich zur physischen Konfiguration auch die logische Konfiguration nicht mehr mittels des Engineeringsystems 100. Vielmehr ist stattdessen vorgesehen, ein Konfigurationsprogramm bevorzugt mittels des Engineeringsystems 100 zu entwerfen bzw. zu erstellen, welches Programmcode umfasst, mit dem eine Vorrichtung 200 programmierbar ist, Netzteilnehmer wie die Geräte A bis E, hinsichtlich sowohl logischer als auch physischer Aspekte des Datenaustausch über das Netz zu konfigurieren und hierfür unter Ansprechen auf wenigstens eine von einer Bedienperson angegebene konfigurationsrelevante Information eine Menge von erforderlichen Konfigurationsdaten zu generieren und zumindest eine Teilmenge der generierten Konfigurationsdaten über das Netz an einen zu konfigurierenden Teilnehmer zu übertragen. Dabei kann die Vorrichtung 200 sowohl eine Geräteliste 20 als auch in Bezug auf die Konfiguration hinsichtlich logischer Aspekte entsprechende Konfigurationsdaten generieren, die insbesondere die IO-Zuordnungen und IO-Konfiguration definieren.

Wie aus der Figur 3a zu erkennen ist, handelt es sich bei der Vorrichtung 200 auch in diesem Beispiel um eine Steuerung, so dass hier die Vorrichtung 200 gleichzeitig auch die Steuerung S ist. Aus diesem Grund umfasst das mittels des Engineeringssystems 100 erstellte Steuerungsprogramm 10 neben einer Menge von Programmcode für die Gerätesteuerung mit entsprechenden Prozessvariablen und/oder Adressen 11 auch einen zusätzlichen Programmabschnitt 13 welcher Programmcode, bevorzugt unter Einbindung wenigstens eines Funktionsbausteins für die physische Konfiguration von Geräten bzw. Netzteilnehmern enthält, sowie einen weiteren zusätzlichen Programmabschnitt 12 welcher Programmcode, bevorzugt unter Einbindung wenigstens eines Funktionsbausteins für die logische Konfiguration von Geräten bzw. Netzteilnehmern. Derartige Funktionsbausteine oder ähnliche bzw. andere Mechanismen können aber auch in ein eigenständiges Konfigurationsprogramm eingebunden sein, vor allem dann, wenn die Vorrichtung 200 separat von der Steuerung S ausgeführt ist, was anwendungsspezifisch erfindungsgemäß ebenfalls vorgesehen sein kann.

Erfindungsgemäß kann daher bei dieser Ausführungsvariante bereits die Übertragung des Steuerungsprogramm 10 samt der Programmabschnitts 12 und 13 an die Vorrichtung 200, welche in diesem Fall gleichzeitig auch die Steuerung S ist, erfolgen (in der Figur als Download bezeichnet), wobei das Engineeringsystem 100 zumindest vorübergehend mit der Vorrichtung 200 verbunden ist.

Wie aus der Figur 3a ersichtlich ist, liegt auf der Vorrichtung 200 ein Gerätekatalog 50 (Repository) mit Einträgen für Gerätetypen vor, welche bevorzugt gegliedert nach Gerätearten wie Switch, IO oder Drive sind, wobei zu jedem Gerätetyp bereits eine Menge weiterer Beschreibungsdaten wie zum Beispiel der Herstellername vorhanden sind. Ein solcher Gerätekatalog 50 kann bevorzugt ebenfalls mittels eines Engineeringsystems 100 erstellt und dann an die Vorrichtung 200 übertragen worden sein.

Ein Funktionsbaustein zum Hinzufügen eines Datensatzes für ein bestimmtes Gerät zur Geräteliste, unter Nutzung der Beschreibungsdaten, die zu dem Gerätetyp dieses Geräts im Gerätekatalog hinterlegt sind, könnte zum Beispiel wie folgt aussehen:

```
 FB_CreateLogDevice(IN: DeviceID, DeviceNature, DeviceType,
 VendorID) return ErrorCode
```

Ein Funktionsbaustein zum Erstellen einer IO-Zuordnung zwischen einer Variable 11 des Steuerungsprogramms 10 und einer Prozessdatenadresse eines Gerätes, das in der Geräteliste 20 enthalten ist, könnte zum Beispiel wie folgt aussehen:

| |
|---|
| ```
 FB_CreateIOConnection(IN: VariableName, DeviceID, Adress)
``` |

Bei Ausführung des Steuerungsprogramms wird bevorzugter Weise zunächst der Programmabschnitt 12 und somit der Programmcode für die logische Konfiguration der Netzteilnehmer ausgeführt.

Über eine Bedieneinheit, welche in der Figur nicht dargestellt ist, hat eine Bedienperson nun die Möglichkeit, auf einfache Weise konfigurationsrelevante Informationen anzugeben und mit Blick auf die gewünschte Netztopologie insbesondere welche Geräte darin vorkommen, damit eine Geräteliste 20 mit entsprechenden Gerätedatensätzen generiert werden kann. Dabei kann die Bedienperson auf die Informationen aus den Einträgen im Gerätekatalog 50 zurückgreifen und braucht somit bevorzugter Weise nur noch die entsprechenden Gerätetypen auswählen und eindeutige Gerätenamen anzugeben.

Unter Ansprechen auf diese Informationen, generiert die Vorrichtung 200 bzw. die Steuerung S die entsprechende Geräteliste 20. Hierzu werden zweckmäßiger Weise die im Gerätekatalog 50 enthaltenen Informationen bezüglich der Gerätetypen und weiteren Daten der einzelnen Geräte A bis E und der Steuerung S und vor allem deren Netzschnittstellen herangezogen.

Ein Programmabschnitt zur Generierung der Geräteliste 20 unter Nutzung des Gerätekatalogs 50 würde zum Hinzufügen eines Datensatzes für das Gerät "A" der Geräteart "Switch", des Gerätetyps "Typ 1" und des Herstellers "H1" sowie eines Datensatzes für das Gerät "B" der Geräteart "IO", des Gerätetyps "Typs 11" und des Herstellers "H2" sich zur Laufzeit zum Beispiel wie folgt darstellen, wobei die oben erwähnten Funktionsbausteine entsprechend oft genutzt werden:

| |
|---|
| ```
 /* Hinzufügen von Geräten zur Geräteliste */
 FB_CreateLogDevice("A", "Switch", "Typ 1", "H1");
 FB_CreateLogDevice("B", "IO", "Typ 11", "H2");
``` |

Entsprechend ähnlich würde der Programmcode für die für die weiteren Geräte C bis E der Ist-Topologie 300 aussehen.

Über die in der Figur nicht dargestellte Bedieneinheit hat die Bedienperson weiterhin die Möglichkeit, konfigurationsrelevante Informationen hinsichtlich der IO-Zuordnung anzugeben.

Ein Programmabschnitt zur Generierung entsprechender Verknüpfungen zwischen einer Variable 11 des Steuerungsprogramms 10 und einer Prozessdatenadresse eines Gerätes, das nunmehr in der Geräteliste 20 enthalten ist, könnte sich zur Laufzeit zum Beispiel wie folgt darstellen, wobei die oben erwähnten Funktionsbausteine entsprechend oft genutzt werden:

| |
|---|
| ```
 /* IO-Zuordnung */
 FB_CreateIOConnection("Variable1", "A", "Adresse 10.4");
``` |
| ```
 FB_CreateIOConnection("Variable2", "B", "Adresse 6.4");
``` |

Entsprechend ähnlich würde der Programmcode für die für die weiteren Geräte C bis E der Ist-Topologie 300 aussehen.

Ein Programmabschnitt zur Generierung weiterer Konfigurationsdaten, insbesondere hinsichtlich der IO-Konfiguration, unter Ansprechen auf entsprechende Angaben der Bedienperson etwa in Bezug auf Parameter wie Updatezeiten oder Timeouts für einzelne Geräte kann ebenfalls vorgesehen sein.

Möglich ist es auch, falls für ein Gerät kein passender Eintrag im Gerätekatalog 50 enthalten ist, dass alle erforderlichen Daten bzw. Parameter von der Bedienperson mittels der Bedieneinheit angegeben werden, wobei diese für eine spätere Verwendung auch im Gerätekatalog 50 hinterlegbar wären, oder dass alternativ auch ein erweiterter Gerätekatalog 50 auf die Vorrichtung 200 geladen werden kann.

Denkbar ist ferner, dass Angaben zu einem Gerät, sofern sie sich nicht dem Gerätekatalog 50 entnehmen lassen, aus dem jeweiligen Gerät durch die Vorrichtung 200 ausgelesen werden, wenn das Gerät bereits mit der Vorrichtung 200 verbunden ist.

Bevorzugter Weise im Anschluss an die Konfiguration der logischen Elemente bzw. Aspekte kann die Konfiguration hinsichtlich der physischen Aspekte erfolgen, wobei hierzu der Programmabschnitt 13 und somit der Programmcode für die physische Konfiguration der Netzteilnehmer ausgeführt wird. Bei der Generierung der physischen Konfigurationsdaten, welche im Wesentlichen wie bereits oben für die erste Ausführungsvariante beschrieben erfolgt, kann auf die nunmehr vorliegende Geräteliste 20 zurückgegriffen werden.

Wie aus der Figur 3a ferner ersichtlich ist, ist die Vorrichtung 200 zweckmäßiger Weise auch mit weiterem Programmcode 14 zur Plausibilitätsprüfung der generierten Soll-Topologie 40, mit Programmcode 15 zur Prüfung der Soll-Topologie 40 in Bezug auf die vorliegende Ist-Topologie 300 sowie mit Programmcode 17 zur Berechnung von IRT-Kommunikationsparametern programmiert, wobei diesbezüglich ebenfalls auf die vorstehenden Erläuterungen zur ersten Ausführungsvariante verwiesen wird.

Schließlich werden auch gemäß der Ausführungsvariante wie in Figur 3a gezeigt, die geplanten und generierten bzw. berechneten Konfigurationsdaten von der Vorrichtung 200 bzw. der Steuerung S an die weiteren Teilnehmer des Netzes gemäß Ist-Topologie 300, also an die Geräte A bis E übertragen (in der Figur als Download bezeichnet), wobei jeder Teilnehmer die für ihn relevante Teilmenge an Konfigurationsdaten erhält.

Bevorzugt ist die Vorrichtung 200 mit weiterem zusätzlichen Programmcode, welcher in der Figur nicht dargestellt ist, derart programmiert, dass sie die Funktionalität bietet, Gerätenamen und/oder sonstige Geräteidentifikationen, wie sie gemäß der Soll-Topologie 40 und der Geräteliste 20 vorgesehen sind, an Geräte A bis E der Ist-Topologie 300 zu vergeben (sogenannte Gerätetaufe), damit im späteren Betrieb der Anlage und des Netzes eine eineindeutige Identifizierung der Geräte sichergestellt ist, wobei von der Vorrichtung 200 bzw. der Steuerung S die "zu taufenden" Geräte der Ist-Topologie zunächst anhand der mit ihnen jeweils verbundenen Nachbargeräte und gegebenenfalls anhand der jeweiligen Geräteart und/oder des Gerätetyps ermittelt werden. Für den Fehlerfall, also beispielsweise wenn eine Gerät in der Ist-Topologie nicht ermittelt werden kann, stehen entsprechende Diagnoseinformationen bereit, auf die dann entsprechend reagiert werden.

Die Figuren 3b und 3c zeigen ein Beispiel für die Konfiguration der Geräte einer Anlage unter Anwendung der Ausführungsvariante der Erfindung gemäß Figur 3a, nachdem ein Gerät eines ersten Typs (Figur 3b) durch ein Gerät eines zweiten Typs (Figur 3c) ersetzt wurde.

Eine Maschine oder Anlage kann eine Vielzahl von miteinander in Verbindung stehenden Geräten umfassen. Das Beispiel geht vom Betrieb einer Windkraftanlage aus, in der neben einer Steuerung 200 (SPS) und den Geräte A und B auch noch ein Frequenzumrichter vom Typ 1 verwendet wird, welcher in Figur 3b als Gerät X1 dargestellt ist, wobei die Geräte A, B, X1 und die Steuerung 200 miteinander verbunden und somit Teilnehmer eines gemeinsamen Kommunikationsnetzes sind. Die kleinen Nummern neben den Teilnehmern stellen die eindeutige Bezeichnung ihrer jeweiligen Netzschnittstelle dar.

Fällt eine Komponente aus, so kann sie nicht immer durch eine baugleiche Komponente ersetzt werden. Da Maschinen und Anlagen oft über viele Jahrzehnte im Einsatz sind, kann man im Moment der Anlagenerstellung noch nicht wissen, welche Ersatzkomponenten einmal zum Einsatz kommen werden. So soll nach einem Ausfall des Frequenzumrichters vom Typ 1 dieser durch einen Frequenzumrichter vom Typ 2, wie er in Figur 3c zu sehen ist, ersetzt werden, welcher zwar grundsätzlich die gleiche Funktion erfüllt, jedoch eine andere Identifizierung, insbesondere einen anderen Gerätenamen, Gerätetyp und Gerätehersteller hat sowie eine andere Reihenfolge der Prozessdaten besitzt. Die Konfiguration und Integration dieser Ersatzkomponente anderen Typs ist erfindungsgemäß jedoch auf einfache und sichere Weise möglich.

Die Steuerung (SPS) 200 gemäß Figur 3b und 3c ist gemäß der oben beschriebenen und in Figur 3a dargestellten Ausführungsvariante programmiert, einerseits die Geräte aller möglichen Varianten der Anlage steuern zu können, anderseits aber auch die Konfigurationsdaten generieren zu können, welche zur Konfiguration der jeweiligen Geräte hinsichtlich sowohl logischer als physischer Aspekte des Datenaustauschs zwischen den Geräten und der Steuerung erforderlich sind.

Demzufolge befindet sich auf der Steuerung 200 bereits, ohne dass dies in den Figuren 3b und 3c explizit dargestellt ist, neben dem entsprechenden Programmcode auch ein Gerätekatalog, wie oben bereits in Verbindung mit Figur 3a beschrieben.

Um die in Figur 3c dargestellten Geräte der Anlage und insbesondere das Gerät X2 hinsichtlich logischer Aspekte des Datenaustauschs konfigurieren zu können, benötigt die Steuerung 200 die Eingabe konfigurationsrelevanter Informationen durch die Bedienperson. Letztere kann hierzu den mit der Steuerung 200 verbundenen Visualisierungsterminal 400 als Bedieneinheit nutzen, um anzugeben, dass sich nunmehr das Gerät X2 in der Anlage befindet, wobei die Bedienperson auf die im Gerätekatalog zum Gerätetyp des Geräts X2 enthaltenen Beschreibungsdaten zurückgreifen kann und somit bevorzugter Weise nur noch den eindeutigen Gerätenamen anzugeben braucht, damit zunächst ein unter Ansprechen auf diese Informationen von der Steuerung 200 generierter Gerätedatensatz für das Gerät X2 in die Geräteliste eingefügt werden kann.

Der entsprechende Programmabschnitt zum Generieren und Hinzufügen eines Gerätedatensatzes für das Gerät "X2", der Geräteart "Frequenzumrichter", des Gerätetyps "Typ 2" und des Herstellers "HS 23" mit einer Updatezeit von "1 ms" könnte zur Laufzeit zum Beispiel wie folgt aussehen:

| |
|---|
| ```
 FB_CreateLogDevice("X2", "Frequenzumrichter", "Typ 2", "HS
 23", "1 ms");
``` |

Die Bedienperson kann den mit der Steuerung 200 verbundenen Visualisierungsterminal 400 ferner nutzen, um Informationen hinsichtlich der IO-Zuordnung anzugeben, da das Gerät X2 eine andere Beschaltung der Prozess- bzw. IO-Daten aufweist.

Ein Programmabschnitt zur Generierung entsprechender Verknüpfungen zwischen einer Variable "SollDrehzahl" des Steuerungsprogramms 10 und einer Prozessdatenadresse des Geräts X2, das nunmehr in der Geräteliste enthalten ist, könnte sich zur Laufzeit zum Beispiel wie folgt darstellen:

| |
|---|
| ```
 FB_CreateIOConnection("SollDrehzahl", "X2", "Adresse 8.2");
``` |

Um die in Figur 3c dargestellten Geräte der Anlage auch hinsichtlich physischer Aspekte des Datenaustauschs konfigurieren zu können, ist der Steuerung 200 noch anzugeben, dass nunmehr anstelle des Geräts X1 das Gerät X2 mit seinem Port 2 mit dem Port 1 des Geräts B verbunden ist. Hierzu können zum einen der Visualisierungsterminal 400 und zum anderen die Informationen aus den Datensätzen der Geräteliste genutzt werden, so dass die Bedienperson bevorzugter Weise nur noch die entsprechenden Geräte und Netzschnittstellen auszuwählen braucht.

Der entsprechende Programmabschnitt zur anschließenden Verarbeitung der von der Bedienperson angegebenen konfigurationsrelevanten Informationen und Generierung einer entsprechenden Soll-Topologie könnte zur Laufzeit zum Beispiel wie folgt aussehen:

| |
|---|
| ```
 FB_AddDevice("SPS");
 FB_AddDevice("A");
 FB_AddDevice("B");
 FB_AddDevice("X2");
 FB_AddConnection("SPS", "1", "A", "2");
 FB_AddConnection("A", "1", "B", "2");
 FB_AddConnection("B", "1", "X2", "2");
``` |

Des Weiteren erfolgt eine Plausibilitätsprüfung der generierten Soll-Topologie auf der Steuerung 200. Zudem erfolgt eine Prüfung der Soll-Topologie gegen die vorliegende Ist-Topologie. Für den Fehlerfall würden jeweils entsprechende Diagnoseinformationen bereitstehen, die zum Beispiel über den mit der Steuerung 200 verbundenen Visualisierungsterminal 400 ausgegeben werden können. Weiterhin werden die notwendigen IRT-Kommunikationsparameter, zum Beispiel Sende- und Empfangszeitpunkte von Datentelegrammen, durch die Steuerung 200 errechnet.

Schließlich werden die geplanten und generierten bzw. berechneten Konfigurationsdaten von der Steuerung 200 an die weiteren Teilnehmer des Netzes, also an die Geräte A, B und X2 übertragen, wobei jeder Teilnehmer die für ihn relevante Teilmenge an Konfigurationsdaten erhält.

Danach kann der Betrieb der Anlage mit den Geräten gemäß Figur 3c aktiviert werden.

Abschließend sei nochmals darauf hingewiesen, dass das Verfahren und die Vorrichtung 200 gemäß einer der beschriebenen Ausführungsvarianten und Beispiele in ihrer Eignung nicht nicht auf die Anwendung für PROFINET IRT-Netze beschränkt sind. Beispielsweise kann es auch für PROFINET RT-Netze gegebenenfalls sinnvoll sein, die logische Konfiguration auf der Steuerung durch das Steuerungsprogramm erzeugen zu lassen. Optional kann für PROFINET RT-Netze auch die Soll-Topologievorgabe durch die Steuerung sowie die Überprüfung der Soll-Topologie sinnvoll sein, selbst wenn keine anschließende Berechnung von IRT-Kommunikationsparametern erforderlich ist.

## Patentansprüche

1. Datenverarbeitungs- und -übertragungssystem, wobei das Datenverarbeitungs- und -übertragungssystem eine Vorrichtung (S, 200) zum Datenaustausch mit wenigstens einem weiteren Teilnehmer (A, B, C, D, E, X), mit dem die Vorrichtung (S, 200), selbst einen ersten Teilnehmer darstellend, über ein PROFINET-Netzwerk verbindbar ist, umfasst, und
wobei das Datenverarbeitungs- und -übertragungssystem ein Engineeringsystem zur Übertragung von Konfigurationsdaten an die Vorrichtung umfasst, **dadurch gekennzeichnet, dass**
- die Vorrichtung (S, 200) programmiert ist, zumindest den wenigstens einen weiteren Teilnehmer hinsichtlich des Datenaustauschs über das PROFINET-Netzwerk gemäß eines Soll-Zustands zu konfigurieren,
- der Soll-Zustand eine Soll-Topologie (40) umfasst,
- die Vorrichtung (S, 200) angepasst ist, die Soll-Topologie unter Ansprechen auf einen Satz konfigurationsrelevanter Informationen für eine bestimmte Variante einer modular aufgebauten Anlage oder Maschine zu generieren,
- der Satz konfigurationsrelevanter Informationen spezifische Informationen umfasst, die den wenigstens einen weiteren Teilnehmer als Gerät detailliert beschreiben und wobei die spezifischen Informationen zumindest eine der folgenden Informationen des wenigstens einen weiteren Teilnehmers umfassen:
i) einen eindeutigen Gerätenamen,
ii) Informationen zu Geräteart, Gerätetyp und Gerätehersteller,
iii) eine Funktionsbeschreibung,
iv) eine Definition von Prozessdaten, und
v) eine eindeutige Bezeichnung jeder Netzschnittstelle und des jeweiligen Netzschnittstellentyps;
- die Vorrichtung angepasst ist, unter Ansprechen auf wenigstens eine von einer Bedienperson angegebene konfigurationsrelevante Information eine Menge von für das Konfigurieren zumindest des wenigstens einen weiteren Teilnehmers erforderlichen Konfigurationsdaten zu generieren und zumindest eine Teilmenge dieser generierten Menge von Konfigurationsdaten an den wenigstens einen weiteren Teilnehmer über das PROFINET-Netzwerk zu übermitteln,
- die Menge der generierten und für das Konfigurieren zumindest des wenigstens einen weiteren Teilnehmers hinsichtlich physischer Aspekte erforderlichen Konfigurationsdaten die Soll-Topologie (40) für das PROFINET-Netzwerk umfasst,
- die Vorrichtung angepasst ist, eine Prüfung der Soll-Topologie (40) gegen die vorliegende Ist-Topologie (300) durchzuführen.

2. Vorrichtung nach vorstehendem Anspruch,
wobei die wenigstens eine konfigurationsrelevante Information mittels einer der Vorrichtung zugeordneten Mensch-Maschine-Schnittstelle (400) von der Bedienperson angebbar ist.

3. Vorrichtung nach einem der Ansprüche 1 oder 2,
wobei diese programmiert ist, zumindest den wenigstens einen weiteren Teilnehmer (A, B, C, D, E, X) hinsichtlich logischer und/oder physischer Aspekte des Datenaustauschs über das Netz zu konfigurieren.

4. Vorrichtung nach einem der Ansprüche 1 bis 3,
wobei die Mittel zum Datenaustausch für einen zyklischen Datenaustausch über das Netz ausgebildet sind.

5. Vorrichtung nach einem der Ansprüche 1 bis 4,
wobei die Vorrichtung programmiert ist, zumindest den wenigstens einen weiteren Teilnehmer (A, B, C, D, E, X) hinsichtlich eines echtzeitgebundenen Datenaustauschs über das Netz zu konfigurieren.

6. Vorrichtung nach einem der Ansprüche 1 bis 5,
wobei die Vorrichtung programmiert ist, zumindest den wenigstens einen weiteren Teilnehmer (A, B, C, D, E, X) hinsichtlich eines taktsynchronen Datenaustauschs über das Netz zu konfigurieren.

7. Vorrichtung nach einem der Ansprüche 1 bis 6,
wobei die Mittel zum Datenaustausch für einen Datenaustausch über das Netz gemäß Profinet-, Profinet RT- oder Profinet IRT-Spezifikation ausgebildet sind.

8. Vorrichtung nach vorstehendem Anspruch,
wobei die Menge der generierten und für das Konfigurieren zumindest des wenigstens einen weiteren Teilnehmers erforderlichen Konfigurationsdaten eine Menge von von der Vorrichtung berechneten IRTspezifischen Parametern umfasst.

9. Vorrichtung nach einem der Ansprüche 1 bis 8,
wobei diese eine Menge von konfigurationsrelevanten Informationen aus dem Netz und/oder dem wenigstens einen weiteren Teilnehmer ausliest, basierend darauf die Menge von für das Konfigurieren zumindest des wenigstens einen weiteren Teilnehmers erforderlichen Konfigurationsdaten generiert und unter Ansprechen auf wenigstens eine von der Bedienperson angegebene konfigurationsrelevante Information zumindest eine Teilmenge dieser generierten Menge von Konfigurationsdaten an den wenigstens einen weiteren Teilnehmer (A, B, C, D, E, X) über das Netz übermittelt.

10. Vorrichtung nach einem der Ansprüche 1 bis 9,
wobei diese die Menge der generierten und für das Konfigurieren zumindest des wenigstens einen weiteren Teilnehmers (A, B, C, D, E, X) erforderlichen Konfigurationsdaten zunächst auf Plausibilität in sich überprüft, bevor sie zumindest eine Teilmenge dieser generierten Menge von Konfigurationsdaten an den wenigstens einen weiteren Teilnehmer über das Netz übermittelt.

11. Vorrichtung nach einem der Ansprüche 1 bis 10,
wobei diese die Menge der generierten und für das Konfigurieren zumindest des wenigstens einen weiteren Teilnehmers (A, B, C, D, E, X) erforderlichen Konfigurationsdaten zunächst auf Plausibilität hinsichtlich des Ist-Zustands des Netzes und zumindest des wenigstens einen weiteren Teilnehmers überprüft, bevor sie zumindest eine Teilmenge dieser generierten Menge von Konfigurationsdaten an den wenigstens einen weiteren Teilnehmer über das Netz übermittelt.

12. Vorrichtung nach einem der Ansprüche 1 bis 11,
wobei diese programmiert ist, sich selbst mittels zumindest einer Teilmenge der generierten Menge von Konfigurationsdaten hinsichtlich des Datenaustauschs über das Netz zu konfigurieren.

13. Vorrichtung nach einem der Ansprüche 1 bis 12,
wobei diese programmiert ist, nach dem Konfigurieren den wenigstens einen weiteren Teilnehmer (A, B, C, D, E, X) zu steuern, und
wobei die Vorrichtung insbesondere eine speicherprogrammierbare Steuerung (SPS) ist.

## Claims

1. A data processing and transmission system,
said data processing and transmission system comprising a device (S, 200) for data exchange with at least one further subscriber (A, B, C, D, E, X) to which said device (S, 200) itself representing a first subscriber is connectable via a PROFINET network, and
wherein said data processing and transmission system comprises an engineering system for transmitting configuration data to said device;
**characterized in that**
- the device (S, 200) is programmed to configure at least the at least one further subscriber with regard to the data exchange via the PROFINET network according to a target state;
- the target state comprises a target topology (40);
- the device (S, 200) is adapted to generate the target topology in response to a set of configuration-relevant information for a particular variant of a modular system or machine;
- the set of configuration-relevant information comprises specific information describing the at least one further subscriber as a device in detail, and wherein the specific information comprise at least one of the following information of the at least one further subscriber:
i) a unique device name;
ii) information about the kind of device, type of device and device manufacturer;
iii) a functional description;
iv) a definition of process data; and
v) a unique designation for each network interface and the respective type of network interface;
- the device is adapted to generate, in response to at least one item of configuration-relevant information specified by an operator, a set of configuration data required for configuring the at least one further subscriber, and to transmit at least a subset of this generated set of configuration data to the at least one further subscriber via the PROFINET network;
- the set of configuration data generated and required for configuring the at least one further subscriber with regard to physical aspects comprises the target topology (40) for the PROFINET network;
- the device is adapted to perform a test of the target topology (40) against the present actual topology (300).

2. The device according to the preceding claim,
wherein the at least one item of configuration-relevant information is specifiable by the operator using a human-machine interface (400) associated with the device.

3. The device according to any one of claims 1 or 2,
wherein the device is programmed to configure at least the at least one further subscriber (A, B, C, D, E, X) with regard to logical and/or physical aspects of the data exchange via the network.

4. The device according to any one of claims 1 to 3,
wherein the means for data exchange are adapted for a cyclic data exchange via the network.

5. The device according to any one of claims 1 to 4,
wherein the device is programmed to configure at least the at least one further subscriber (A, B, C, D, E, X) with regard to real-time data exchange via the network.

6. The device according to any one of claims 1 to 5,
wherein the device is programmed to configure at least the at least one further subscriber (A, B, C, D, E, X) with regard to an isochronous data exchange via the network.

7. The device according to any one of claims 1 to 6,
wherein the means for data exchange are adapted for a data exchange via the network according to the PROFINET, PROFINET RT or PROFINET IRT specifications.

8. The device according to the preceding claim,
wherein the set of configuration data generated and required for configuring at least the at least one further subscriber comprises a set of IRT-specific parameters calculated by the device.

9. The device according to any one of claims 1 to 8,
wherein the device reads out a set of configuration-relevant information from the network and/or from the at least one further subscriber, generates the set of configuration data required for configuring at least the at least one further subscriber based thereon, and is responsive to at least one item of configuration-relevant information specified by the operator to transmit at least a subset of this generated set of configuration data to the at least one further subscriber (A, B, C, D, E, X) via the network.

10. The device according to any one of claims 1 to 9,
wherein the device first performs a plausibility check on the set of configuration data generated and required for configuring at least the at least one further subscriber (A, B, C, D, E, X), before transmitting at least a subset of this generated set of configuration data to the at least one further subscriber via the network.

11. The device according to any one of claims 1 to 10,
wherein the device first performs a plausibility check on the set of configuration data generated and required for configuring at least the at least one further subscriber (A, B, C, D, E, X) with respect to the actual state of the network and at least of the at least one further subscriber, before transmitting at least a subset of this generated set of configuration data to the at least one further subscriber via the network.

12. The device according to any one of claims 1 to 11,
wherein the device is programmed to configure itself with regard to the data exchange via the network using at least a subset of the generated set of configuration data.

13. The device according to any one of claims 1 to 12,
wherein the device is programmed to control the at least one further subscriber (A, B, C, D, E, X) after the configuring; and
wherein the device is in particular a programmable logic controller (PLC).

## Revendications

1. Système de traitement et de transmission de données, dans lequel le système de traitement et de transmission de données comprend un dispositif (S, 200) pour l'échange de données avec au moins un autre participant (A, B, C, D, E, X) avec lequel le dispositif (S, 200), représentant lui-même un participant, peut être relié via un réseau PROFINET, et dans lequel le système de traitement et de transmission de données comprend un système d'ingénierie pour transmettre des données de configuration au dispositif, **caractérisé en ce que**
- le dispositif (S, 200) est programmé pour configurer via le réseau PROFINET conformément à un état planifié au moins le au moins un autre participant s'agissant de l'échange de données,
- l'état planifié comprend une topologie planifiée (40),
- le dispositif (S, 200) est adapté pour générer la topologie planifiée, sous l'effet d'un jeu d'informations relatives à une configuration, pour une variante déterminée d'une installation ou d'une machine construite de façon modulaire,
- le jeu d'informations relatives à une configuration comprend des informations spécifiques qui décrivent en détail le au moins un autre participant en tant qu'équipement et dans lequel les informations spécifiques comprennent au moins une des informations suivantes du au moins un autre participant :
i) un nom d'équipement explicite,
ii) des informations quant à la famille d'équipement, au type d'équipement et au fabricant d'équipement,
iii) une description de fonction,
iv) une définition de données de processus, et
v) une désignation explicite de chaque interface réseau et du type d'interface réseau respectif ;
- le dispositif est adapté pour générer une quantité de données de configuration requises, sous l'effet d'au moins une information relative à une configuration indiquée par un opérateur, pour la configuration d'au moins le au moins un autre participant, et transmettre via le réseau PROFINET au moins une partie de cette quantité générée de données de configuration à le au moins un autre participant,
- la quantité des données de configuration générées et requises pour la configuration d'au moins le au moins un autre participant s'agissant d'aspects physiques comprend la topologie planifiée (40) pour le réseau PROFINET,
- le dispositif est adapté pour réaliser un contrôle de la topologie planifiée (40) au regard de la topologie réalisée (300) existante.

2. Dispositif selon la revendication précédente, dans lequel la au moins une information relative à une configuration peut être indiquée par l'opérateur au moyen d'une interface homme-machine (400) attribuée au dispositif.

3. Dispositif selon l'une des revendications 1 ou 2, dans lequel celui-ci est programmé pour configurer via le réseau au moins le au moins un autre participant (A, B, C, D, E, X) s'agissant d'aspects logiques et/ou physiques de l'échange de données.

4. Dispositif selon l'une des revendications 1 à 3, dans lequel les moyens de l'échange de données pour un échange de données cyclique sont formés via le réseau.

5. Dispositif selon l'une des revendications 1 à 4, dans lequel le dispositif est programmé pour configurer via le réseau au moins le au moins un autre participant (A, B, C, D, E, X) s'agissant d'un échange de données lié au temps réel.

6. Dispositif selon l'une des revendications 1 à 5, dans lequel le dispositif est programmé pour configurer via le réseau au moins le au moins un autre participant (A, B, C, D, E, X) s'agissant d'un échange de données synchrone.

7. Dispositif selon l'une des revendications 1 à 6, dans lequel les moyens de l'échange de données pour un échange de données via le réseau sont formés conformément à la norme Profinet, Profinet RT ou Profinet IRT.

8. Dispositif selon la revendication précédente, dans lequel la quantité des données de configuration générées et requises pour la configuration d'au moins le au moins un autre participant comprend une quantité de paramètres spécifiques IRT calculés par le dispositif.

9. Dispositif selon l'une des revendications 1 à 8, dans lequel celui-ci lit une quantité d'informations relatives à une configuration depuis le réseau et/ou le au moins un autre participant, se basant là-dessus génère la quantité de données de configuration requises pour la configuration d'au moins le au moins un autre participant et, sous l'effet d'au moins une information relative à une configuration indiquée par l'opérateur, transmet via le réseau au moins une partie de cette quantité générée de données de configuration à le au moins un autre participant (A, B, C, D, E, X).

10. Dispositif selon l'une des revendications 1 à 9, dans lequel celui-ci vérifie tout d'abord quant à la plausibilité en soi la quantité des données de configuration générées et requises pour la configuration d'au moins le au moins un autre participant (A, B, C, D, E, X), avant qu'il ne transmette via le réseau au moins une partie de cette quantité générée de données de configuration à le au moins un autre participant.

11. Dispositif selon l'une des revendications 1 à 10, dans lequel celui-ci vérifie tout d'abord quant à la plausibilité s'agissant de l'état planifié du réseau et du au moins un autre participant la quantité des données de configuration générées et requises pour la configuration d'au moins le au moins un autre participant (A, B, C, D, E, X), avant qu'il ne transmette via le réseau au moins une partie de cette quantité générée de données de configuration à le au moins un autre participant.

12. Dispositif selon l'une des revendications 1 à 11, dans lequel celui-ci est programmé pour se configurer tout seul via le réseau au moyen d'au moins une partie de la quantité générée de données de configuration s'agissant de l'échange de données.

13. Dispositif selon l'une des revendications 1 à 12, dans lequel celui-ci est programmé pour guider le au moins un autre participant (A, B, C, D, E, X) après la configuration, et dans lequel le dispositif est en particulier un automate programmable industriel (API).
